# EUROPEAN PATENT APPLICATION

(11) **EP 4 564 918 A1**
(43) Date of publication of application: **04.06.2025**
(21) Application number: 23947813.4
(22) Date of filing: 29.06.2023
(51) Int. Cl.: H04W 36/00

(54) **COMMUNICATION METHOD AND RELATED APPARATUS**

(30) Priority: 26.08.2022 CN 202211035394
(71) Applicant: Huawei Technologies Co., Ltd., Shenzhen, Guangdong 518129 (CN)
(72) Inventor: LUO, Zhihu, Shenzhen, Guangdong 518129 (CN); WU, Yiling, Shenzhen, Guangdong 518129 (CN); JIN, Zhe, Shenzhen, Guangdong 518129 (CN)
(74) Representative: Isarpatent
(86) International application number: PCT/CN2023/104278
(87) International publication number: WO 2024/041193

(57) **Abstract**

This application discloses a communication method and a related apparatus. The method includes: A first device obtains first information, where the first information includes at least one of condition information for accessing a first cell and resource configuration information for accessing the first cell. The first device sends the first information to a second device, where the first information is used for the second device to determine whether access to the first cell is allowed, or the first information is used for the second device to determine a first resource for accessing the first cell, and the first resource is used for the second device to communicate with the first device. According to the method, duration of waiting for access and communication by the second device in wireless communication can be reduced, power consumption during waiting for communication is reduced, and energy efficiency is improved.

## Description

This application claims priority to Chinese Patent Application No. 202211035394.5, filed with the China National Intellectual Property Administration on August 26, 2022 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

With popularization of machine type communication (machine type communication, MTC) and internet of things (internet of things, IoT) communication in a 5th generation mobile network (5th generation mobile network, 5G) new radio (new radio, NR) access technology, an increasing quantity of IoT devices have been deployed in people's life. Examples are smart water meters, shared bicycles, and devices that are designed for sensing and data collection in smart city, environment monitoring, smart household, forest fire prevention, and the like. Because there is a large quantity of IoT devices distributed in a wide range, great challenges like energy consumption are brought about in a process of implementing the internet of everything.

Currently, an IoT device needs to communicate with a base station or another device by using a standard cellular protocol to implement an internet of everything. However, when the IoT device is far away from the base station or another device or a large quantity of devices need to perform communication, wireless communication needs to consume a large amount of power, and energy efficiency is low.

### SUMMARY

Embodiments of this application provide a communication method and a related apparatus, to reduce duration of waiting for communication by a device in wireless communication, reduce power consumption, and improve energy efficiency.

According to a first aspect, an embodiment of this application provides a communication method. The method includes:
A first device obtains first information, where the first information includes at least one of condition information for accessing a first cell and resource configuration information for accessing the first cell.

The first device sends the first information to a second device, where the first information is used for the second device to determine whether access to the first cell is allowed, or the first information is used for the second device to determine a first resource for accessing the first cell, and the first resource is used for the second device to communicate with the first device.

In this embodiment of this application, a communication method is provided. A first device obtains first information, and sends the first information to a second device, so that the second device can determine, based on the first information, whether access to a first cell is allowed, or a resource for accessing the first cell. The first cell is a cell corresponding to the first device. Further, the first cell may be a cell in which the first device can provide a communication service for the second device. The resource for accessing the first cell is used for the second device to communicate with the first device. The second device may be understood as one or more devices that interact or communicate with the first device.

The first information may include at least one of condition information for accessing the first cell or resource configuration information for accessing the first cell. The condition information for accessing the first cell may indicate specific second devices that are allowed to access the first cell. This can avoid an access conflict caused by simultaneous access to the first cell by all second devices, and can further avoid high energy consumption caused by long time for waiting for communication by some second devices in wireless communication due to an access conflict. The resource configuration information for accessing the first cell may be used to control, based on different access resources, a time sequence in which second devices access the first cell, so that a second device with a high access requirement can preferentially access the first cell for communication. This implements time-division access of second devices, and therefore reduces duration of waiting for communication by the second device in wireless communication, reduces power consumption during waiting for communication, and improves energy efficiency. The first information is used for determining whether the second device is allowed to access the first cell, or a first resource for accessing the first cell.

According to this embodiment of this application, the second device may determine, based on related information that is used for accessing the first cell and that is indicated by the first information of the first device, whether the second device is allowed to access the first cell, or the first resource for accessing the first cell, so that the second device can perform cell access according to an access requirement of the second device, and a second device with a high access requirement can preferentially access a cell for communication. This implements time-division access of second devices, and therefore reduces duration of waiting for communication by the second device in wireless communication, reduces power consumption during waiting for communication, and improves energy efficiency.

In a possible implementation, that the first information is used for the second device to determine whether access to the first cell is allowed, or the first information is used for the second device to determine a first resource for accessing the first cell includes:
The first information and third information are used for the second device to determine whether access to the first cell is allowed, or the first information and the third information are used for the second device to determine the first resource for accessing the first cell.

The third information is determined based on at least one of the following:
information about a charging speed of the second device, information about a discharging speed of the second device, information about remaining operation duration of the second device, information about remaining power of the second device, information about a power supply type of the second device, information about a capacitance of the second device, information about energy needed for activating the second device, information about a ratio of communication duration to charging duration of the second device, and measurement information of the second device.

In this implementation of this application, a possible specific implementation of the third information is provided. Specifically, the third information is determined based on information for measuring energy of the second device, and may be specifically determined based on at least one of the following: information about a charging speed of the second device, information about a discharging speed of the second device, information about remaining operation duration of the second device, information about remaining power of the second device, information about a power supply type of the second device, information about a capacitance of the second device, information about energy needed for activating the second device, information about a ratio of communication duration to charging duration of the second device, and the like; or may be determined based on information that describes a coverage status of the first device and the second device, for example, measurement information of the second device and information about a distance between the first device and the second device.

The third information may include one or more parameters, and the one or more parameters are related to the foregoing information for measuring energy and/or coverage of the second device.

According to this embodiment of this application, the third information corresponds to energy information and/or coverage information of the second device, and the second device may determine, based on the first information and the third information, whether the second device is allowed to access the first cell, or the first resource for accessing the first cell. This implements time-division access of second devices, and therefore reduces duration of waiting for communication by some second devices in wireless communication, reduces power consumption during waiting for communication, and improves energy efficiency.

In a possible implementation, the method further includes:
The first device receives information from the second device, where the information about the second device includes at least one of the following:
information about a charging speed of the second device, information about a discharging speed of the second device, information about remaining operation duration of the second device, information about remaining power of the second device, information about a power supply type of the second device, information about a capacitance of the second device, information about energy needed for activating the second device, information about a ratio of communication duration to charging duration of the second device, and measurement information of the second device.

In a possible implementation, the method further includes:
The first device determines the first information based on the information about the second device.

In this implementation of this application, a possible specific implementation of determining the first information is provided. Specifically, the first device receives information from the second device, and determines the first information based on the information about the second device. The information about the second device includes information for measuring energy and/or coverage of the second device. The first information includes at least one of the condition information for accessing the first cell and the resource configuration information for accessing the first cell. The first information determined based on the information about the second device incorporates the energy information and/or the coverage information of the second device, so that the condition information for accessing the first cell or the resource configuration information for accessing the first cell that is delivered by the first device can be more accurate. According to this embodiment of this application, the condition information for accessing the first cell or the resource configuration information for accessing the first cell that is obtained can be more accurate based on the information about the second device that is sent by the second device, so that the second device can determine, based on the condition information for accessing the first cell or the resource configuration information for accessing the first cell that is more accurate, whether access to the first cell is allowed, or the first resource for accessing the first cell.

According to a second aspect, an embodiment of this application provides a communication method. The method includes:
A second device receives first information from a first device, where the first information includes related information for accessing a first cell.

The second device determines, based on the first information, whether access to the first cell is allowed, or a first resource for accessing the first cell, where the first resource is used for communicating with the first device.

In this embodiment of this application, a communication method is provided. A second device receives first information from a first device, and determines, based on the first information, whether access to a first cell is allowed, or a first resource for accessing the first cell. The first information includes related information for accessing the first cell. The first cell is a cell corresponding to the first device. Further, the first cell may be a cell in which the first device can provide a communication service for the second device. The first resource is used for the second device to communicate with the first device. The second device may be understood as one or more devices that interact or communicate with the first device. According to this embodiment of this application, the second device may determine, based on related information that is used for accessing the first cell and that is indicated by the first information of the first device, whether the second device is allowed to access the first cell, or the first resource for accessing the first cell, so that the second device can perform cell access according to an access requirement of the second device, and a second device with a high access requirement can preferentially access a cell for communication. This implements time-division access of second devices, and therefore reduces duration of waiting for communication by the second device in wireless communication, reduces power consumption during waiting for communication, and improves energy efficiency.

In a possible implementation, the first information includes at least one of the following:
condition information for accessing the first cell and resource configuration information for accessing the first cell.

In this implementation of this application, a possible specific implementation of the first information is provided. Specifically, the first information may include at least one of the condition information for accessing the first cell or the resource configuration information for accessing the first cell. The condition information for accessing the first cell may indicate specific second devices that are allowed to access the first cell. Correspondingly, the second device may determine, based on the condition information for accessing the first cell, whether the first device allows the second device to access the first cell. This can avoid an access conflict caused by simultaneous access to the first cell by all second devices, and can further avoid high energy consumption caused by long time for waiting for communication by some second devices in wireless communication due to an access conflict. The resource configuration information for accessing the first cell may be used to control, based on different access resources, a time sequence in which second devices access the first cell. Correspondingly, the second device may determine, based on the resource configuration information for accessing the first cell, the first resource for accessing the first cell, so that a second device with a high access requirement can preferentially access the first cell for communication. This implements time-division access of second devices, and therefore reduces duration of waiting for communication by the second device in wireless communication, reduces power consumption during waiting for communication, and improves energy efficiency.

In a possible implementation, the determining, based on the first information, whether access to the first cell is allowed, or a first resource for accessing the first cell includes:
determining, based on the first information and third information, whether access to the first cell is allowed, or the first resource for accessing the first cell.

The third information is determined based on at least one of the following:
information about a charging speed of the second device, information about a discharging speed of the second device, information about remaining operation duration of the second device, information about remaining power of the second device, information about a power supply type of the second device, information about a capacitance of the second device, information about energy needed for activating the second device, information about a ratio of communication duration to charging duration of the second device, and measurement information of the second device.

In this implementation of this application, a possible specific implementation of the third information is provided. Specifically, the third information is determined based on information for measuring energy and/or coverage of the second device, and may be specifically determined based on at least one of the following: information about a charging speed of the second device, information about a discharging speed of the second device, information about remaining operation duration of the second device, information about remaining power of the second device, information about a power supply type of the second device, information about a capacitance of the second device, information about energy needed for activating the second device, information about a ratio of communication duration to charging duration of the second device, measurement information of the second device, and the like; or may be information that describes a coverage status of the first device and the second device, for example, information about a distance between the first device and the second device. The third information may include one or more parameters, and the one or more parameters are related to the foregoing information for measuring energy and/or coverage of the second device. The third information may alternatively include one or more functions, and the one or more functions are related to the foregoing information for measuring energy and/or coverage of the second device. According to this embodiment of this application, the third information corresponds to energy information and/or coverage information of the second device, and the second device may determine, based on the first information and the third information, whether to access the first cell, or the first resource for accessing the first cell. This implements time-division access of second devices, and therefore reduces duration of waiting for communication by some second devices in wireless communication, reduces power consumption during waiting for communication, and improves energy efficiency.

In a possible implementation, the first information includes the condition information for accessing the first cell, and the determining, based on the first information and third information, whether access to the first cell is allowed includes:
determining a level of the second device based on the first information and the third information; and
determining, based on the first information and the level of the second device, whether access to the first cell is allowed.

In this implementation of this application, a possible specific implementation of determining whether to access the first cell is provided. Specifically, the first information includes the condition information for accessing the first cell, the condition information may specifically include a threshold and cell access barring indication information, and the condition information for accessing the first cell may indicate specific second devices that are allowed to access the first cell. The third information is determined based on information for measuring energy and/or coverage of the second device. The second device determines the level of the second device based on the third information and the threshold in the condition information. A higher level of the second device indicates more energy of the second device, or indicates a lower energy consumption speed of the second device, and further indicates a larger access waiting delay allowed by the second device. The second device may determine, based on the cell access barring indication information in the condition information for accessing the first cell and the level of the second device, whether the first device allows the second device to access the first cell. This can avoid an access conflict caused by simultaneous access to the first cell by all second devices, and can further avoid high energy consumption caused by long time for waiting for communication by some second devices in wireless communication due to an access conflict. According to this embodiment of this application, whether to access the first cell may be determined based on the level of the second device and the condition information that is used for accessing the first cell and that is indicated by the first information of the first device. This implements time-division access of second devices, and therefore reduces duration of waiting for communication by the second device in wireless communication, reduces power consumption during waiting for communication, and improves energy efficiency.

In a possible implementation, the determining, based on the condition information and the level of the second device, whether access to the first cell is allowed includes:
When the level of the second device is less than a first threshold indicated by the condition information, the second device determines that access to the first cell is allowed; or
when the level of the second device is greater than or equal to a second threshold indicated by the condition information, the second device determines that access to the first cell is not allowed, where the first threshold is less than or equal to the second threshold.

In this implementation of this application, a possible specific implementation of determining whether to access the first cell is provided. Specifically, the condition information for accessing the first cell may indicate specific second devices that are allowed to access the first cell. Specifically, specific levels of second devices that are allowed to access the first cell may be indicated by a threshold, or specific levels of second devices that are not allowed to access the first cell may be indicated by a threshold. For example, the condition information indicates, by using the first threshold, that a second device at a level less than the first threshold is allowed to access the first cell. The level of the second device being less than the first threshold indicated by the condition information indicates that energy of the second device is small, or indicates that an energy consumption speed of the second device is high, and further indicates that an access waiting delay allowed by the second device is small. In this case, the second device determines to access the first cell. Alternatively, the condition information indicates, by using the second threshold, that a second device at a level greater than or equal to the second threshold is not allowed to access the first cell. The level of the second device being greater than or equal to the second threshold indicated by the condition information indicates that energy of the second device is large, or indicates that an energy consumption speed of the second device is low, and further indicates that an access waiting delay allowed by the second device is large. In this case, the second device determines not to access the first cell. The first threshold is less than or equal to the second threshold. That access is not allowed may also be understood as that access is barred. According to this embodiment of this application, whether access to the first cell is allowed may be determined based on the level of the second device and the condition information that is used for accessing the first cell and that is indicated by the first information of the first device. This implements time-division access of second devices, and therefore reduces duration of waiting for communication by the second device in wireless communication, reduces power consumption during waiting for communication, and improves energy efficiency.

In a possible implementation, the first information includes the resource configuration information for accessing the first cell, and the determining, based on the first information and third information, the first resource for accessing the first cell includes:
determining a level of the second device based on the first information and the third information; and
determining, based on the first information and the level of the second device, the first resource for accessing the first cell.

In this implementation of this application, a possible specific implementation of determining the first resource for accessing the first cell is provided. Specifically, the first information includes the resource configuration information for accessing the first cell, and the resource configuration information for accessing the first cell may control, based on different access resources, a time sequence in which second devices access the first cell. The third information is determined based on information for measuring energy and/or coverage of the second device. The second device determines the level of the second device based on the third information and a threshold included in the first information. A higher level of the second device indicates more energy of the second device, or indicates a lower energy consumption speed of the second device, and further indicates a larger access waiting delay allowed by the second device. The second device may determine, based on the resource configuration information for accessing the first cell and the level of the second device, the first resource for accessing the first cell, so that a second device with a high access requirement can preferentially access the first cell for communication. This reduces duration of waiting for communication by the second device in wireless communication, reduces power consumption during waiting for communication, and improves energy efficiency. According to this embodiment of this application, the first resource for accessing the first cell may be determined based on the level of the second device and the resource configuration information that is used for accessing the first cell and that is indicated by the first information of the first device. This implements time-division access of second devices, and therefore reduces duration of waiting for communication by the second device in wireless communication, reduces power consumption during waiting for communication, and improves energy efficiency.

In a possible implementation, the determining, based on the resource configuration information and the level of the second device, the first resource for accessing the first cell includes:
determining a correspondence between a device level and an access resource based on the resource configuration information and the level of the second device; and
determining, based on the correspondence, the first resource corresponding to the level of the second device.

In this implementation of this application, a possible specific implementation of determining the first resource for accessing the first cell is provided. Specifically, the resource configuration information for accessing the first cell may be used to control, based on different access resources, a time sequence in which second devices access the first cell. Specifically, a correspondence between access occasions corresponding to different access resources and second devices at different levels may be configured, to control a time sequence in which second devices access the first cell. The second device determines the correspondence between the device level and the access resource based on the resource configuration information and the level of the second device. A higher device level indicates more energy of the device, or indicates a lower energy consumption speed of the second device, and further indicates a larger access waiting delay allowed by the second device and a later access occasion corresponding to an access resource corresponding to the device level. The second device determines, based on the correspondence between the device level and the access resource, the first resource corresponding to the level of the second device. According to this embodiment of this application, the first resource for accessing the first cell may be determined based on the level of the second device and the resource configuration information that is used for accessing the first cell and that is indicated by the first information of the first device, so that a second device with a high access requirement can preferentially access the first cell for communication. This implements time-division access of second devices, and therefore reduces duration of waiting for communication by the second device in wireless communication, reduces power consumption during waiting for communication, and improves energy efficiency.

In a possible implementation, the correspondence between the device level and the access resource includes a mapping relationship between an access occasion corresponding to the access resource and the device level.

In this implementation of this application, a possible specific implementation of the mapping relationship between the access occasion corresponding to the access resource and the device level is provided. Specifically, a higher device level indicates more energy of the device, or indicates a lower energy consumption speed of the second device, and further indicates a larger access waiting delay allowed by the second device and a later access occasion corresponding to an access resource corresponding to the device level.

In a possible implementation, the method further includes:
The second device sends information about the second device to the first device, where the information about the second device includes at least one of the following:
information about a charging speed of the second device, information about a discharging speed of the second device, information about remaining operation duration of the second device, information about remaining power of the second device, information about a power supply type of the second device, information about a capacitance of the second device, information about energy needed for activating the second device, information about a ratio of communication duration to charging duration of the second device, and measurement information of the second device.

In this implementation of this application, a possible specific implementation of sending the information about the second device is provided. Specifically, the second device sends the information about the second device to the first device, where the information about the second device includes information for measuring energy and/or coverage of the second device. The information about the second device is used for the first device to determine the first information. The first information includes related information for accessing the first cell. The first information determined based on the information about the second device incorporates an energy status and/or a coverage status of the second device, so that related information for accessing the first cell that is delivered by the first device can be more accurate. According to this embodiment of this application, the related information for accessing the first cell that is obtained can be more accurate based on the information about the second device that is sent by the second device, so that the second device can determine, based on the related information for accessing the first cell that is more accurate, whether access to the first cell is allowed, or the first resource for accessing the first cell.

According to a third aspect, an embodiment of this application provides a communication method. The method includes:
A first device receives information about a second device that is sent by the second device, where the information about the second device includes at least one of the following:
information about a charging speed of the second device, information about a discharging speed of the second device, information about remaining operation duration of the second device, information about remaining power of the second device, information about a power supply type of the second device, information about a capacitance of the second device, information about energy needed for activating the second device, information about a ratio of communication duration to charging duration of the second device, and measurement information of the second device.

Optionally, the first device determines first information based on the information about the second device; and
the first device sends the first information to the second device, where the first information is used for the second device to determine whether access to a first cell is allowed, or the first information is used for the second device to determine a first resource for accessing the first cell, and the first resource is used for the first device to communicate with the second device.

For technical effect of the third aspect and any possible implementation, refer to descriptions of technical effect corresponding to the first aspect and a corresponding implementation.

According to a fourth aspect, an embodiment of this application provides a communication method. The method includes:
A second device obtains information about the second device.

The second device sends the information about the second device to a first device, where the information about the second device includes at least one of the following:
information about a charging speed of the second device, information about a discharging speed of the second device, information about remaining operation duration of the second device, information about remaining power of the second device, information about a power supply type of the second device, information about a capacitance of the second device, information about energy needed for activating the second device, information about a ratio of communication duration to charging duration of the second device, and measurement information of the second device.

For technical effect of the fourth aspect and any possible implementation, refer to descriptions of technical effect corresponding to the second aspect and a corresponding implementation.

According to a fifth aspect, an embodiment of this application provides a communication method. The method includes:
A first device obtains second information, where the second information includes information about two or more frequency resources for accessing a first cell.

The first device sends the second information to a second device, where the second information is used for the second device to determine a second resource for accessing the first cell, and the second resource is used for the second device to communicate with the first device.

In this embodiment of this application, a communication method is provided. A first device obtains second information, and sends the second information to a second device, so that the second device can determine, based on the second information, a resource for accessing a first cell. The first cell is a cell corresponding to the first device. Further, the first cell may be a cell in which the first device can provide a communication service for the second device. The resource for accessing the first cell is used for the second device to communicate with the first device. The second device may be understood as one or more devices that interact or communicate with the first device.

The second information may include resource configuration information for accessing the first cell. The resource configuration information includes information about two or more frequency resources. Concurrent access through a plurality of frequency resources is introduced, so that an access capacity can be increased. This reduces duration of waiting for access and communication by the second device in wireless communication, reduces power consumption during waiting for communication, and improves energy efficiency.

According to this embodiment of this application, the second resource for accessing the first cell may be determined based on the resource configuration information that is used for accessing the first cell and that is indicated by the second information of the first device, so that second devices can separately perform cell access by using different frequency resources. Concurrent access through a plurality of frequency resources is introduced, so that an access capacity is increased. This reduces duration of waiting for access and communication by the second device in wireless communication, reduces power consumption during waiting for communication, and improves energy efficiency.

In a possible implementation, that the second information is used for the second device to determine a second resource for accessing the first cell includes:
The second information and fourth information are used for the second device to determine the second resource for accessing the first cell, where the fourth information includes a reference value, and the reference value is a random number generated by the second device and/or an identifier of the second device.

In this embodiment of this application, a communication method is provided. A first device obtains second information, and sends the second information to a second device, so that the second device can determine, based on the second information, a resource for accessing a first cell. The first cell is a cell corresponding to the first device. Further, the first cell may be a cell in which the first device can provide a communication service for the second device. The resource for accessing the first cell is used for the second device to communicate with the first device. The second device may be understood as one or more devices that interact or communicate with the first device.

The second information may include resource configuration information for accessing the first cell. The resource configuration information includes information about two or more frequency resources. Concurrent access through a plurality of frequency resources is introduced, so that an access capacity can be increased. This reduces duration of waiting for access and communication by the second device in wireless communication, reduces power consumption during waiting for communication, and improves energy efficiency. The second information, together with fourth information, is used for determining a second resource for the second device to access the first cell. The fourth information includes a reference value, and the reference value may be a random number generated by the second device and/or an identifier of the second device.

According to this embodiment of this application, the second resource for accessing the first cell may be determined based on the resource configuration information that is used for accessing the first cell and that is indicated by the second information of the first device, and the reference value indicated by the fourth information of the second device, so that second devices can separately perform cell access by using different frequency resources. Concurrent access through a plurality of frequency resources is introduced, so that an access capacity is increased. This reduces duration of waiting for access and communication by the second device in wireless communication, reduces power consumption during waiting for communication, and improves energy efficiency.

According to a sixth aspect, an embodiment of this application provides a communication method. The method includes:
A second device receives second information from a first device, where the second information includes resource configuration information for accessing a first cell, and the resource configuration information includes information about two or more frequency resources.

The second device determines, based on the second information and fourth information, a second resource for accessing the first cell, where the fourth information includes a reference value, the reference value is a random number generated by the second device and/or an identifier of the second device, and the second resource is used for communicating with the first device.

In this embodiment of this application, a communication method is provided. A second device receives second information from a first device, and determines, based on the second information and fourth information, a second resource for accessing a first cell. The second information includes resource configuration information for accessing the first cell. The resource configuration information includes information about two or more frequency resources. The fourth information includes a reference value. The reference value may be a random number generated by the second device and/or an identifier of the second device. The first cell is a cell corresponding to the first device. Further, the first cell may be a cell in which the first device can provide a communication service for the second device. The second resource is used for the second device to communicate with the first device. According to this embodiment of this application, the second resource for accessing the first cell may be determined based on the resource configuration information that is used for accessing the first cell and that is indicated by the second information of the first device, and the reference value indicated by the fourth information of the second device, so that second devices can separately perform cell access by using different frequency resources. Concurrent access through a plurality of frequency resources is introduced, so that an access capacity is increased. This reduces duration of waiting for access and communication by the second device in wireless communication, reduces power consumption during waiting for communication, and improves energy efficiency.

In a possible implementation, that the second device determines, based on the second information and fourth information, a second resource for accessing the first cell includes:
The second device determines, from the two or more frequency resources according to a preset rule, a frequency resource corresponding to the reference value as the second resource.

In this implementation of this application, a possible specific implementation of determining the second resource for accessing the first cell is provided. Specifically, the second information includes resource configuration information for accessing the first cell, the resource configuration information includes information about two or more frequency resources, the fourth information includes a reference value, and the second device may select, from the two or more frequency resources, a frequency resource corresponding to the reference value as the second resource for accessing the first cell. According to this embodiment of this application, different second devices may select, from the two or more frequency resources, frequency resources respectively corresponding to reference values of the devices as resources for accessing the first cell, so that second devices can separately perform cell access by using different frequency resources. Concurrent access through a plurality of frequency resources is introduced, so that an access capacity is increased. This reduces duration of waiting for access and communication by the second device in wireless communication, reduces power consumption during waiting for communication, and improves energy efficiency.

In a possible implementation, that the second device determines, from the two or more frequency resources according to a preset rule, a frequency resource corresponding to the reference value as the second resource includes:
when the reference value is within a first range, determining a first frequency resource as the second resource, where the first frequency resource is a frequency resource corresponding to the first range; or
when the reference value is within a second range, determining a second frequency resource as the second resource, where the second frequency resource is a frequency resource corresponding to the second range.

The first frequency resource and the second frequency resource are two different frequency resources among the two or more frequency resources.

In this implementation of this application, a possible specific implementation of determining the second resource for accessing the first cell is provided. Specifically, the second device may select, from the two or more frequency resources, a frequency resource corresponding to the reference value as the second resource for accessing the first cell. For example, when the reference value is within the first range, the first frequency resource corresponding to the first range is determined as the second resource for accessing the first cell; or when the reference value is within the second range, the second frequency resource corresponding to the second range is determined as the second resource for accessing the first cell. According to this embodiment of this application, based on a correspondence between a reference value and a range and a correspondence between a range and a frequency resource, different second devices may select, from the two or more frequency resources, frequency resources respectively corresponding to reference values of the devices as resources for accessing the first cell, so that second devices can separately perform cell access by using different frequency resources. Concurrent access through a plurality of frequency resources is introduced, so that an access capacity is increased. This reduces duration of waiting for access and communication by the second device in wireless communication, reduces power consumption during waiting for communication, and improves energy efficiency.

According to a seventh aspect, an embodiment of this application provides a communication apparatus. The apparatus includes a module or a unit for performing the method according to any one of the first aspect to the sixth aspect.

In a possible design, the apparatus includes:
a processing unit, configured to obtain first information, where the first information includes at least one of condition information for accessing a first cell and resource configuration information for accessing the first cell; and
a transceiver unit, configured to send the first information to a second device, where the first information is used for the second device to determine whether access to the first cell is allowed, or the first information is used for the second device to determine a first resource for accessing the first cell, and the first resource is used for the second device to communicate with the communication apparatus.

In a possible implementation, that the first information is used for the second device to determine whether access to the first cell is allowed, or the first information is used for the second device to determine a first resource for accessing the first cell includes:
The first information and third information are used for the second device to determine whether access to the first cell is allowed, or the first information and the third information are used for the second device to determine the first resource for accessing the first cell.

The third information is determined based on at least one of the following:
information about a charging speed of the second device, information about a discharging speed of the second device, information about remaining operation duration of the second device, information about remaining power of the second device, information about a power supply type of the second device, information about a capacitance of the second device, information about energy needed for activating the second device, information about a ratio of communication duration to charging duration of the second device, and measurement information of the second device.

In a possible implementation, the transceiver unit is further configured to receive information about the second device, where the information about the second device includes at least one of the following:
information about a charging speed of the second device, information about a discharging speed of the second device, information about remaining operation duration of the second device, information about remaining power of the second device, information about a power supply type of the second device, information about a capacitance of the second device, information about energy needed for activating the second device, information about a ratio of communication duration to charging duration of the second device, and measurement information of the second device.

In a possible implementation, the processing unit is further configured to determine the first information based on the information about the second device.

For technical effect of the seventh aspect and any possible implementation, refer to descriptions of technical effect corresponding to the first aspect and a corresponding implementation.

In another possible design, the apparatus includes:
a transceiver unit, configured to receive first information from a first device, where the first information includes related information for accessing a first cell; and
a processing unit, configured to determine, based on the first information, whether access to the first cell is allowed, or a first resource for accessing the first cell, where the first resource is used for communicating with the first device.

In a possible implementation, the first information includes at least one of the following:
condition information for accessing the first cell and resource configuration information for accessing the first cell.

In a possible implementation, the processing unit is specifically configured to determine, based on the first information and third information, whether access to the first cell is allowed, or the first resource for accessing the first cell.

The third information is determined based on at least one of the following:
information about a charging speed of the communication apparatus, information about a discharging speed of the communication apparatus, information about remaining operation duration of the communication apparatus, information about remaining power of the communication apparatus, information about a power supply type of the communication apparatus, information about a capacitance of the communication apparatus, information about energy needed for activating the communication apparatus, information about a ratio of communication duration to charging duration of the communication apparatus, and measurement information of the communication apparatus.

In a possible implementation, the processing unit is further configured to determine a level of the communication apparatus based on the first information and the third information; and
the processing unit is further configured to determine, based on the first information and the level of the communication apparatus, whether access to the first cell is allowed.

In a possible implementation, the processing unit is further configured to: when the level of the communication apparatus is less than a first threshold indicated by the condition information, determine that access to the first cell is allowed; or
the processing unit is further configured to: when the level of the communication apparatus is greater than or equal to a second threshold indicated by the condition information, determine that access to the first cell is not allowed, where the first threshold is less than or equal to the second threshold.

In a possible implementation, the processing unit is further configured to determine a level of the communication apparatus based on the first information and the third information; and
the processing unit is further configured to determine, based on the first information and the level of the communication apparatus, the first resource for accessing the first cell.

In a possible implementation, the processing unit is further configured to determine a correspondence between a device level and an access resource based on the resource configuration information and the level of the communication apparatus; and
the processing unit is further configured to determine, based on the correspondence, the first resource corresponding to the level of the communication apparatus.

In a possible implementation, the correspondence between the device level and the access resource includes a mapping relationship between an access occasion corresponding to the access resource and the device level.

In a possible implementation, the transceiver unit is further configured to send information about the communication apparatus to the first device, where the information about the communication apparatus includes at least one of the following:
information about a charging speed of the communication apparatus, information about a discharging speed of the communication apparatus, information about remaining operation duration of the communication apparatus, information about remaining power of the communication apparatus, information about a power supply type of the communication apparatus, information about a capacitance of the communication apparatus, information about energy needed for activating the communication apparatus, information about a ratio of communication duration to charging duration of the communication apparatus, and measurement information of the communication apparatus.

For technical effect of the seventh aspect and any possible implementation, refer to descriptions of technical effect corresponding to the second aspect and a corresponding implementation.

In another possible design, the apparatus includes:
a transceiver unit, configured to receive information about a second device that is sent by the second device, where the information about the second device includes at least one of the following:
information about a charging speed of the second device, information about a discharging speed of the second device, information about remaining operation duration of the second device, information about remaining power of the second device, information about a power supply type of the second device, information about a capacitance of the second device, information about energy needed for activating the second device, information about a ratio of communication duration to charging duration of the second device, and measurement information of the second device; and
a processing unit, configured to determine first information based on the information about the second device.

The transceiver unit is further configured to send the first information to the second device, where the first information is used for the second device to determine whether access to a first cell is allowed, or the first information is used for the second device to determine a first resource for accessing the first cell, and the first resource is used for the communication apparatus to communicate with the second device.

For technical effect of the seventh aspect and any possible implementation, refer to descriptions of technical effect corresponding to the third aspect and a corresponding implementation.

In another possible design, the apparatus includes:
a processing unit, configured to obtain information about the communication apparatus; and
a transceiver unit, configured to send the information about the communication apparatus to a first device, where the information about the communication apparatus includes at least one of the following:
   information about a charging speed of the communication apparatus, information about a discharging speed of the communication apparatus, information about remaining operation duration of the communication apparatus, information about remaining power of the communication apparatus, information about a power supply type of the communication apparatus, information about a capacitance of the communication apparatus, information about energy needed for activating the communication apparatus, information about a ratio of communication duration to charging duration of the communication apparatus, and measurement information of the communication apparatus.

For technical effect of the seventh aspect and any possible implementation, refer to descriptions of technical effect corresponding to the fourth aspect and a corresponding implementation.

In another possible design, the apparatus includes:
a processing unit, configured to obtain second information, where the second information includes information about two or more frequency resources for accessing a first cell; and
a transceiver unit, configured to send the second information to a second device, where the second information is used for the second device to determine a second resource for accessing the first cell, and the second resource is used for the second device to communicate with the communication apparatus.

In a possible implementation, that the second information is used for the second device to determine a second resource for accessing the first cell includes:
The second information and fourth information are used for the second device to determine the second resource for accessing the first cell, where the fourth information includes a reference value, and the reference value is a random number generated by the second device and/or an identifier of the second device.

For technical effect of the seventh aspect and any possible implementation, refer to descriptions of technical effect corresponding to the fifth aspect and a corresponding implementation.

In another possible design, the apparatus includes:
a transceiver unit, configured to receive second information from a first device, where the second information includes resource configuration information for accessing a first cell, and the resource configuration information includes information about two or more frequency resources; and
a processing unit, configured to determine, based on the second information and fourth information, a second resource for accessing the first cell, where the fourth information includes a reference value, the reference value is a random number generated by the communication apparatus and/or an identifier of the communication apparatus, and the second resource is used for communicating with the first device.

In a possible implementation, the processing unit is further configured to determine, from the two or more frequency resources according to a preset rule, a frequency resource corresponding to the reference value as the second resource.

In a possible implementation, the processing unit is further configured to: when the reference value is within a first range, determine a first frequency resource as the second resource, where the first frequency resource is a frequency resource corresponding to the first range; or
the processing unit is further configured to: when the reference value is within a second range, determine a second frequency resource as the second resource, where the second frequency resource is a frequency resource corresponding to the second range.

The first frequency resource and the second frequency resource are two different frequency resources among the two or more frequency resources.

For technical effect of the seventh aspect and any possible implementation, refer to descriptions of technical effect corresponding to the sixth aspect and a corresponding implementation.

According to an eighth aspect, an embodiment of this application provides a communication apparatus. The communication apparatus includes a processor. The processor is coupled to a memory, and may be configured to execute instructions in the memory, to implement the method according to any one of the first aspect to the sixth aspect or the possible implementations. Optionally, the communication apparatus further includes the memory. Optionally, the communication apparatus further includes a communication interface, and the processor is coupled to the communication interface.

According to a ninth aspect, an embodiment of this application provides a communication apparatus, including a logic circuit and a communication interface. The communication interface is configured to receive information or send information. The logic circuit is configured to receive information or send information through the communication interface, so that the communication apparatus performs the method according to any one of the first aspect to the sixth aspect or the possible implementations.

According to a tenth aspect, an embodiment of this application provides a computer-readable storage medium. The computer-readable storage medium is configured to store a computer program (which may also be referred to as code or instructions). When the computer program is run on a computer, the method according to any one of the first aspect to the sixth aspect or the possible implementations is implemented.

According to an eleventh aspect, an embodiment of this application provides a computer program product. The computer program product includes a computer program (which may also be referred to as code or instructions). When the computer program is run, a computer is enabled to perform the method according to any one of the first aspect to the sixth aspect or the possible implementations.

According to a twelfth aspect, an embodiment of this application provides a chip. The chip includes a processor. The processor is configured to execute instructions. When the processor executes the instructions, the chip is enabled to perform the method according to any one of the first aspect to the sixth aspect or the possible implementations. Optionally, the chip further includes a communication interface, and the communication interface is configured to receive a signal or send a signal.

According to a thirteenth aspect, an embodiment of this application provides a communication system. The communication system includes at least one of the communication apparatus according to the seventh aspect, the communication apparatus according to the eighth aspect, the communication apparatus according to the ninth aspect, or the chip according to the twelfth aspect.

According to a fourteenth aspect, an embodiment of this application provides a communication system. The communication system includes a first device and a second device. The first device is configured to perform the method according to any one of the first aspect or the possible implementations, and the second device is configured to perform the method according to any one of the second aspect or the possible implementations; or the first device is configured to perform the method according to any one of the third aspect or the possible implementations, and the second device is configured to perform the method according to any one of the fourth aspect or the possible implementations.

In addition, in a process of performing the method according to any one of the first aspect to the sixth aspect or the possible implementations, a process related to sending information and/or receiving information or the like in the method may be understood as a process of outputting information by a processor and/or a process of receiving input information by the processor. When outputting information, the processor may output the information to a transceiver (or a communication interface or a sending module), so that the transceiver transmits the information. After the information is output by the processor, other processing may further need to be performed on the information before the information arrives at the transceiver. Similarly, when the processor receives input information, the transceiver (or the communication interface or the sending module) receives the information, and inputs the information to the processor. Further, after the transceiver receives the information, other processing may need to be performed on the information before the information is input to the processor.

According to the foregoing principle, for example, the sending information in the foregoing method may be understood as outputting information by the processor. For another example, the receiving information may be understood as receiving input information by the processor.

Optionally, transmitting, sending, receiving, and other operations related to the processor may be more generally understood as output, receiving, input, and other operations of the processor, unless otherwise specified, or provided that the operations do not conflict with actual functions or internal logic of the operations in related descriptions.

Optionally, in a process of performing the method according to any one of the first aspect to the sixth aspect or the possible implementations, the processor may be a processor specially configured to perform the method, or may be a processor that performs the method by executing computer instructions in a memory, for example, a general-purpose processor. The memory may be a non-transitory (non-transitory) memory, for example, a read-only memory (Read-Only Memory, ROM). The memory and the processor may be integrated in a same chip, or may be separately disposed in different chips. A type of the memory and a manner of disposing the memory and the processor are not limited in embodiments of this application.

In a possible implementation, the at least one memory is located outside an apparatus.

In another possible implementation, the at least one memory is located in an apparatus.

In another possible implementation, some memories in the at least one memory are located in an apparatus, and the other memories are located outside the apparatus.

In this application, the processor and the memory may alternatively be integrated into one component. In other words, the processor and the memory may alternatively be integrated together.

In embodiments of this application, based on the first information sent by the first device and the third information of the second device, the second device can perform cell access according to an access requirement of the second device, and a second device with a high access requirement can preferentially access a cell for communication. This implements time-division access of second devices, and therefore reduces duration of waiting for communication by the second device in wireless communication, reduces power consumption during waiting for communication, and improves energy efficiency. Alternatively, based on the second information sent by the first device and the fourth information of the second device, second devices can separately perform cell access by using different frequency resources. Concurrent access through a plurality of frequency resources is introduced, so that an access capacity is increased. This reduces duration of waiting for access and communication by the second device in wireless communication, reduces power consumption during waiting for communication, and improves energy efficiency.

### BRIEF DESCRIPTION OF DRAWINGS

To describe technical solutions in embodiments of this application more clearly, the following briefly describes accompanying drawings used in embodiments of this application. Clearly, the accompanying drawings described below show merely some embodiments of this application, and a person of ordinary skill in the art may still derive other drawings from these accompanying drawings without creative efforts.
FIG. 1 is a diagram of an architecture of a communication system according to an embodiment of this application;
FIG. 2 is a diagram of RFID communication according to an embodiment of this application;
FIG. 3 is a schematic flowchart of a communication method according to an embodiment of this application;
FIG. 4 is a schematic flowchart of a communication method according to an embodiment of this application;
FIG. 5 is a diagram of RFID communication according to an embodiment of this application;
FIG. 6 is a diagram of a structure of a communication apparatus according to an embodiment of this application;
FIG. 7 is a diagram of a structure of a communication apparatus according to an embodiment of this application; and
FIG. 8 is a diagram of a structure of a chip according to an embodiment of this application.

### DESCRIPTION OF EMBODIMENTS

To make objectives, technical solutions, and advantages of this application clearer, the following describes embodiments of this application with reference to accompanying drawings in embodiments of this application.

The terms "first", "second", and the like in this specification, the claims, and the accompanying drawings of this application are intended to distinguish between different objects, but not to describe a specific sequence. In addition, the terms "include", "have", and any variants thereof are intended to cover a non-exclusive inclusion. For example, a process, a method, a system, a product, a device, or the like that includes a series of steps or units is not limited to the listed steps or units, but optionally further includes steps or units that are not listed, or optionally further includes other steps or units inherent to the process, the method, the product, the device, or the like.

The "embodiment" mentioned in this specification means that a specific feature, structure, or characteristic described with reference to the embodiment may be included in at least one embodiment of this application. The phrase appearing in various locations in this specification does not necessarily mean a same embodiment, and neither means an independent or alternative embodiment mutually exclusive with another embodiment. It can be explicitly and implicitly understood by a person skilled in the art that, in embodiments of this application, unless otherwise specified or a logical conflict occurs, terms and/or descriptions in embodiments are consistent and may be mutually referenced, and technical features in different embodiments may be combined based on an internal logical relationship thereof, to form a new embodiment.

It should be understood that, in this application, "at least one" means one or more, "a plurality of" means two or more, "at least two" means two, three, or more, and "and/or" is used to describe an association relationship between associated objects, and indicates that three relationships may exist. For example, "A and/or B" may indicate the following three cases: Only A exists, only B exists, and both A and B exist, where A and B may be singular or plural. The character "/" usually indicates an "or" relationship between associated objects. "At least one of the following items" or a similar expression indicates any combination of the items, including one of the items or any combination of a plurality of the items. For example, at least one of a, b, or c may indicate a, b, c, "a and b", "a and c", "b and c", or "a, b, and c", where a, b, and c may be singular or plural.

A method provided in this application may be used in various communication systems, for example, an internet of things (internet of things, IoT) system, a narrowband internet of things (narrowband internet of things, NB-IoT) system, a long term evolution (long term evolution, LTE) system, a 5th generation (5th generation, 5G) communication system, and a new communication system (for example, 6G) emerging in future communication development.

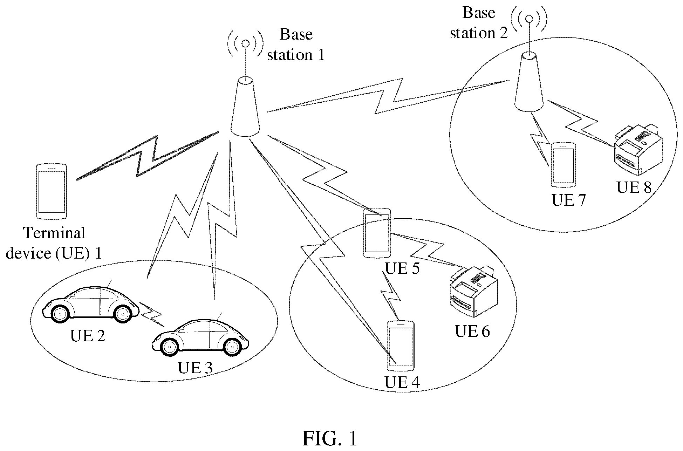

Technical solutions provided in this application may be further used in machine type communication (machine type communication, MTC), a long term evolution-machine (long term evolution-machine, LTE-M) technology, a device-to-device (device-to-device, D2D) network, a machine-to-machine (machine-to-machine, M2M) network, an internet of things (internet of things, IoT) network, or another network. The IoT network may include, for example, an internet of vehicles. Communication modes in an internet of vehicles system are collectively referred to as vehicle-to-everything (vehicle-to-everything, V2X, where X may represent everything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication. For example, in FIG. 1 described below, terminal devices may communicate with each other by using the D2D technology, the M2M technology, or the V2X technology.

FIG. 1 is a diagram of an architecture of a communication system according to an embodiment of this application.

As shown in FIG. 1, the communication system may include at least one access network device and at least one terminal device.

The access network device and the terminal device are separately described as follows.

For example, the access network device may be a next-generation NodeB (next-generation NodeB, gNB), a next-generation evolved NodeB (next-generation evolved NodeB, ng-eNB), or an access network device in future 6G communication. The access network device may be any device with a wireless transceiver function, and includes but is not limited to the base station described above. The base station may alternatively be a base station in a future communication system such as a 6th generation communication system. Optionally, the access network device may be an access node, a wireless relay node, a wireless backhaul node, or the like in a wireless local area network (wireless fidelity, Wi-Fi) system. Optionally, the access network device may be a radio controller in a cloud radio access network (cloud radio access network, CRAN) scenario. Optionally, the access network device may be a wearable device, a vehicle-mounted device, or the like. Optionally, the access network device may be a small cell, a transmission reception point (transmission reception point, TRP) (which may also be referred to as a transmission point), or the like. It can be understood that the access network device may alternatively be a base station or the like in a future evolved public land mobile network (public land mobile network, PLMN).

In some deployments, the base station (for example, the gNB) may include a central unit (central unit, CU) and a distributed unit (distributed unit, DU). To be specific, functions of a base station in an access network are divided, some functions of the base station are deployed on a CU, and remaining functions are deployed on a DU. In addition, a plurality of DUs share one CU. This reduces costs and facilitates network expansion. In some other deployments of the base station, the CU may be further divided into a CU-control plane (control plane, CP), a CU-user plane (user plane, UP), and the like. In still some other deployments of the base station, the base station may alternatively be an open radio access network (open radio access network, ORAN) architecture or the like. A specific type of the base station is not limited in this application.

For ease of description, the following describes the method in this application by using an example in which the access network device is a base station.

For example, the terminal device may also be referred to as a user equipment (user equipment, UE) or a terminal. The terminal device is a device with a wireless transceiver function, and may be deployed on land, including an indoor, outdoor, handheld, wearable, or vehicle-mounted device; or may be deployed on water, for example, on a ship; or may be deployed in air, for example, on an aircraft, a balloon, or a satellite. The terminal device may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home, or the like. It can be understood that the terminal device may alternatively be a terminal device in a future 6G network, a terminal device in a future evolved PLMN, or the like.

It can be understood that the terminal device shown in this application may not only include a vehicle (for example, an entire vehicle) in an internet of vehicles, but also include a vehicle-mounted device, a vehicle-mounted terminal, or the like in the internet of vehicles. A specific form of the terminal device used in the internet of vehicles is not limited in this application.

For ease of description, the following describes the method in this application by using an example in which the terminal device is a UE.

The communication system shown in FIG. 1 includes two base stations and eight UEs, for example, a base station 1, a base station 2, and a UE 1 to a UE 8 in FIG. 1. In the communication system, the base station 1 may send downlink signals such as configuration information or downlink control information (downlink control information, DCI) to the UE 1 to the UE 6, and the UE 1 to the UE 6 may send uplink signals such as SRSs or physical uplink shared channels (physical uplink shared channel, PUSCH) to the base station 1. The base station 1 may further send downlink signals to the UE 7 and the UE 8 through the base station 2, and the UE 7 and the UE 8 may send uplink signals to the base station 1 through the base station 2. The base station 2 may send downlink signals such as configuration information or DCI to the UE 7 and the UE 8, and the UE 7 and the UE 8 may send uplink signals such as SRSs or PUSCHs to the base station 2. It can be understood that, for a manner of communication between UEs, reference may be made to the foregoing descriptions. Details are not described herein again.

It should be understood that FIG. 1 shows two base stations, eight UEs, and communication links between communication devices as an example. Optionally, the communication system may include a plurality of base stations, and a coverage area of each base station may include another quantity of UEs, for example, more or fewer UEs. This is not limited in this application.

Each of the foregoing communication devices, for example, the base station 1, the base station 2, and the UE 1 to the UE 8 in FIG. 1, may be equipped with a plurality of antennas. The plurality of antennas may include at least one transmit antenna for sending a signal, at least one receive antenna for receiving a signal, and the like. A specific structure of each communication device is not limited in embodiments of this application. Optionally, the communication system may further include another network entity, for example, a network controller or a mobility management entity. This is not limited in embodiments of this application.

It can be understood that the diagram of the communication system shown in FIG. 1 is merely an example. For a diagram of a communication system in another form, refer to a related standard or protocol or the like. Details are not described herein again.

Embodiments shown below are applicable to the communication system shown in FIG. 1, and are also applicable to a communication system in another form. This is not described in detail below again.

This application provides a communication method. The method is used in the field of communication technologies, for example, radio frequency identification (radio frequency identification, RFID) communication. Before the method in this application is described in detail, to describe solutions of this application more clearly, the following first describes some knowledge related to RFID communication.

With popularization of machine type communication (machine type communication, MTC) and internet of things (internet of things, IoT) communication in a 5th generation mobile network (5th generation mobile network, 5G) new radio (new radio, NR) access technology, an increasing quantity of IoT devices have been deployed in people's life. Examples are smart water meters, shared bicycles, and devices that are designed for sensing and data collection in smart city, environment monitoring, smart household, forest fire prevention, and the like. In the future, IoT devices are to be used everywhere, and may be embedded in every piece of clothing, every parcel, and every key. Almost all offline objects are to be put online with enablement by an internet of things technology. However, because there is a large quantity of IoT devices distributed in a wide range, great challenges like device energy consumption and power supply are brought about to the industry in a process of implementing the internet of everything.

Currently, an IoT device needs to communicate with a base station or another device by using a standard cellular protocol to implement an internet of everything. However, because the base station needs to cover an area as large as possible, the IoT device needs to be still able to perform communication when the IoT device is far away from the base station. Consequently, the IoT device still needs to consume high energy during wireless communication. Therefore, a current IoT device still needs a high-capacity battery for operation. Consequently, it is difficult to reduce a size of the IoT device, and costs of the IoT device are increased. However, in internet of things application scenarios such as medical care, smart household, industrial sensors, and wearable devices, because sizes of such terminal devices are limited, it is difficult to extend operation time of the terminal devices simply by increasing a battery capacity. Therefore, to extend standby time of a terminal device, power consumption of the terminal device in wireless communication needs to be reduced.

In a backscatter communication technology, communication is performed by using a backscatter signal of a radio frequency signal. Because a radio transceiver is removed, an energy requirement is greatly reduced. In the technology, a radio frequency signal in an environment is fully utilized, and is used as a carrier for information transmission. Compared with an active radio transceiver, in backscatter communication, energy consumption is reduced from a watt level to a microwatt level. This greatly reduces power consumption of wireless communication.

Based on this principle of the backscatter communication technology, in the radio frequency identification (radio frequency identification, RFID) technology, non-contact bidirectional data communication is performed in a radio frequency mode, and reading and writing are performed on a recording medium (an electronic tag or a radio frequency card) in the radio frequency mode, to identify a target and exchange data. As a low-cost passive communication technology, RFID communication has gained extensive development in the retail industry, and has become a standard technology for object identification or positioning in logistics or warehouse management. A specific operation principle of RFID communication is as follows: After a tag enters a reader/writer, the tag (a passive tag, passive tag or passive tag) receives a radio frequency signal transmitted by the reader/writer, and sends, by using energy obtained by an induced current, product information stored in a chip. Alternatively, the tag (an active tag, active tag or active tag) actively sends a signal with a specific frequency, and the reader/writer reads information, performs decoding, and then sends decoded information to a central information system for related data processing.

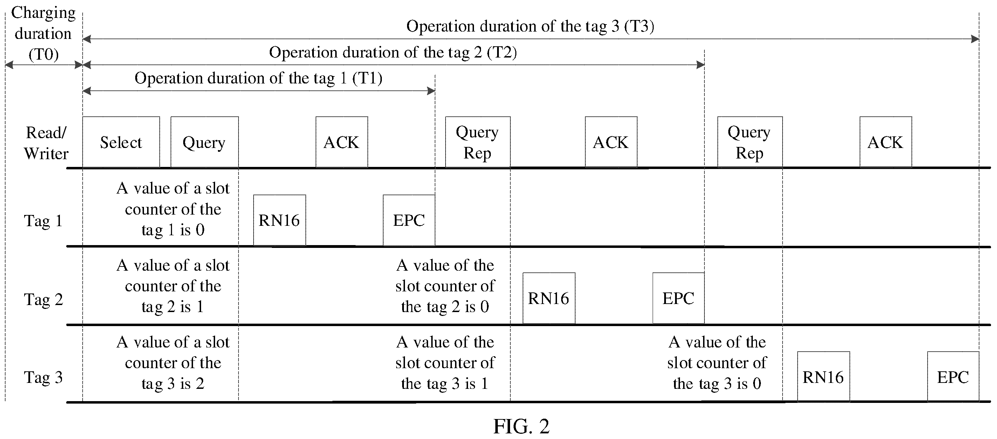

For details about RFID communication, refer to FIG. 2. FIG. 2 is a diagram of RFID communication according to an embodiment of this application.

FIG. 2 shows a process of RFID communication between a reader/writer and tags (a tag 1, a tag 2, and a tag 3). A specific process is as follows.

Step 1: a tag selection process

The reader/writer first sends select (Select) signaling, to use the select signaling to select a specific tag or tag group for inventory and access.

Step 2: a tag inventory process

The tag receives query (Query) signaling from the reader/writer, where a parameter of the query signaling includes Q. A to-be-inventoried tag selects a random number from a range of (0, 2^{Q}-1) and packages the random number into a slot counter of the tag. In this case, a tag that selects a non-zero value switches to an arbitration state, and a tag that selects a zero value enters a response state, and returns an RN16. Then the reader/writer returns an ACK command that includes a same RN16 to acknowledge the tag. The acknowledged tag switches to an acknowledged state and returns an EPC, to complete a basic information inventory process for the tag. When an identified tag receives query repetition (QueryRep) signaling or query adjustment (QueryAdjust) signaling, an inventory flag (A→B or B→A) of the tag is reversed, the tag switches to a ready state, and the inventory process ends.

Step 3: a query repetition (QueryRep) process and a query adjustment (QueryAdjust) process

The QueryRep signaling repeats the previous query operation without changing any parameter. Each time a tag in an arbitration state receives a piece of QueryRep signaling, a value of a slot counter of the tag is decreased by 1. In this case, a tag with a slot counter whose value is decreased to 0 repeats a response process same as the foregoing response process.

The QueryAdjust signaling repeats the previous query operation and may increase or decrease a Q value. If a tag in an arbitration state receives QueryAdjust signaling, adjusts a Q value, and then reselects a random number from the range of (0, 2^{Q}-1) and packages the random number into a slot counter of the tag, a tag that selects a non-zero value switches to an arbitration state, and a tag that selects a zero value enters a response state.

In a dynamic slot ALOHA mechanism, for a specific tag, the tag may not be able to perform data transmission immediately because the tag selects a large random number from the range of (0, 2^{Q}-1). Therefore, the tag needs to wait for a long time, and the tag can perform uplink data transmission only when a value of a slot counter is decreased to 0. During waiting by the tag, an operation circuit of the tag remains in an active state, causing high power consumption. Consequently, operation duration of the tag is shortened, or data that can be transmitted by the tag is limited.

For example, in FIG. 2, three tags (the tag 1, the tag 2, and the tag 3) experience same charging duration. After the three tags receive query signaling, a value of a slot counter of the tag 1 is 0, a value of a slot counter of the tag 2 is 1, and a value of a slot counter of the tag 3 is 2. Because the value of the slot counter of the tag 1 is 0, the tag 1 may send an RN16 to the reader/writer after receiving the query signaling. When receiving ACK signaling sent by the reader/writer, where the ACK signaling includes the RN16 of the tag 1, the tag 1 may send an EPC to the reader/writer after receiving the ACK signaling. In this case, because the value of the slot counter of the tag 2 is 1 and the value of the slot counter of the tag 3 is 2, the tag 2 and the tag 3 cannot immediately send an RN16 or an EPC to the reader/writer, and need to wait for a long time. In this case, the tag 2 and the tag 3 need to maintain long operation duration with same charging duration. If the tag 2 and the tag 3 are powered off during waiting, the tag 2 and the tag 3 need to be recharged to accumulate energy, and then re-perform a process of establishing communication with the reader/writer. This is equivalent to wasting energy accumulated by the tag 2 and the tag 3 in a first round of charging, and greatly lowers energy efficiency.

For the foregoing technical problem that a terminal device (tag) needs to consume a large amount of power in wireless communication and has low energy efficiency, embodiments of this application provide a communication method, to reduce time of waiting for communication by a terminal device (tag) in wireless communication, reduce power consumption, and improve energy efficiency.

It should be understood that the reader/writer in embodiments of this application is also referred to as an interface device (interface device, IFD), a card acceptance device CAD, a coupling device CD (a close coupling device CCD, a proximity coupling device PCD, a vicinity coupling device VCD, or a terminal CAD), or the like. The reader/writer is usually considered as a read/write terminal device for radio frequency identification. The reader/writer can not only read a radio frequency tag, but also erase data, and therefore is referred to as the reader/writer. In the communication method provided in embodiments of this application, the reader/writer mentioned above may correspond to a first device in the communication method, and correspondingly, the terminal device (tag) mentioned above may correspond to a second device in the communication method. This is not described in detail below again.

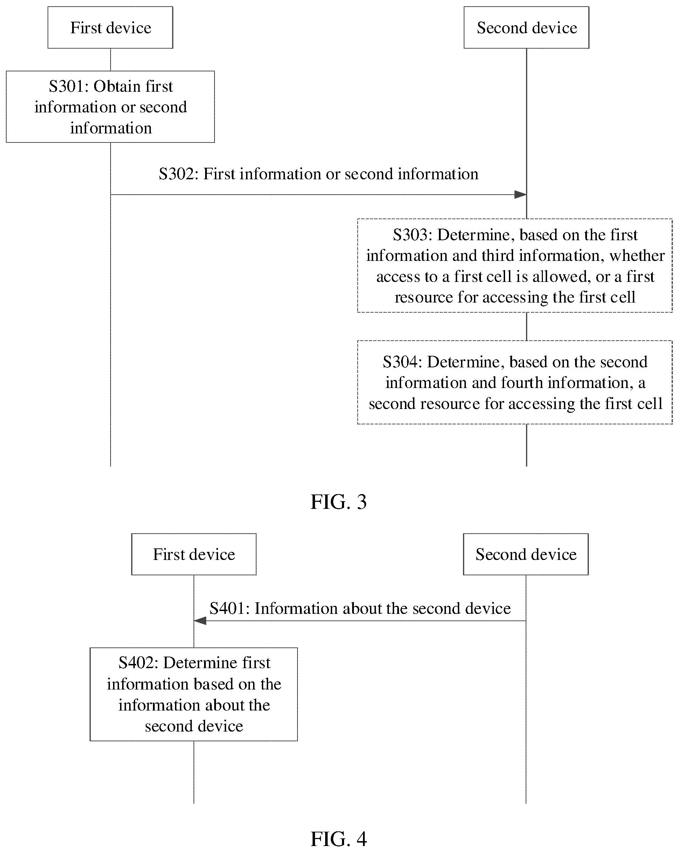

FIG. 3 is a schematic flowchart of a communication method according to an embodiment of this application. The communication method is used in the field of communication technologies, for example, RFID communication. The communication method includes but is not limited to the following steps.

S301: Obtain first information or second information.

A first device obtains the first information or the second information.

The first information includes related information for accessing a first cell. The first cell is a cell corresponding to the first device. Further, the first cell may be a cell in which the first device can provide a communication service for a second device.

Optionally, the first information may include at least one of condition information for accessing the first cell or resource configuration information for accessing the first cell.

The condition information for accessing the first cell may indicate specific second devices that are allowed to access the first cell. Correspondingly, the second device may determine, based on the condition information for accessing the first cell, whether the first device allows the second device to access the first cell. This can avoid an access conflict caused by simultaneous access to the first cell by all second devices, and can further avoid high energy consumption caused by long time for waiting for communication by some second devices in wireless communication due to an access conflict. The second device may be understood as one or more devices that interact or communicate with the first device.

The resource configuration information for accessing the first cell may be used to control, based on different access resources, a time sequence in which second devices access the first cell. Correspondingly, the second device may determine, based on the resource configuration information for accessing the first cell, the first resource for accessing the first cell, so that a second device with a high access requirement can preferentially access the first cell for communication. This implements time-division access of second devices, and therefore reduces duration of waiting for communication by the second device in wireless communication, reduces power consumption during waiting for communication, and improves energy efficiency.

The second information may include resource configuration information for accessing the first cell, and the resource configuration information includes information about two or more frequency resources.

Concurrent access through a plurality of frequency resources is introduced in the second information, so that an access capacity can be increased. This reduces duration of waiting for access and communication by the second device in wireless communication, reduces power consumption during waiting for communication, and improves energy efficiency.

It can be understood that the first device in this embodiment of this application is a device equipped with a processor that can be configured to execute computer-executable instructions, and may be an access network device, for example, a base station or a transmission point TRP, or may be specifically the access network device (including but not limited to any one of the base station 1 and the base station 2) in FIG. 1, or may be specifically the reader/writer device in FIG. 2, and is configured to perform the communication method in this embodiment of this application, to reduce duration of waiting for communication by the second device in wireless communication, reduce power consumption during waiting for communication, and improve energy efficiency.

It can be understood that the second device in this embodiment of this application is a device equipped with a processor that can be configured to execute computer-executable instructions, and may be a terminal device, for example, a handheld terminal (a mobile phone, a tablet computer, or the like) or a vehicle-mounted terminal (a wireless terminal in self-driving or the like), or may be specifically the terminal device (including but not limited to any one of the UE 1 to the UE 8) in FIG. 1, or may be specifically the IoT device (including but not limited to any one of the tag 1 to the tag 3) in FIG. 2, and is configured to perform the communication method in this embodiment of this application, to reduce duration of waiting for communication by the second device in wireless communication, reduce power consumption during waiting for communication, and improve energy efficiency.

S302: The first device sends the first information or the second information to the second device, and correspondingly, the second device receives the first information or the second information from the first device.

In a possible embodiment, the first device sends the first information to the second device, and correspondingly, the second device receives the first information from the first device.

In this case, the first information, together with third information, is used for determining whether the second device is allowed to access the first cell, or the first resource for accessing the first cell. The third information is determined based on information for measuring energy of the second device, or may be specifically determined based on information that describes a coverage status of the first device and the second device, for example, information about a distance between the first device and the second device.

According to this embodiment of this application, whether the second device is allowed to access the first cell, or the first resource for accessing the first cell may be determined based on information about energy of the second device and related information that is used for accessing the first cell and that is indicated by the first information of the first device, so that the second device can perform cell access according to an access requirement of the second device, and a second device with a high access requirement can preferentially access a cell for communication. This implements time-division access of second devices, and therefore reduces duration of waiting for communication by the second device in wireless communication, reduces power consumption during waiting for communication, and improves energy efficiency.

In a possible embodiment, the first device sends the second information to the second device, and correspondingly, the second device receives the second information from the first device.

In this case, the second information, together with fourth information, is used for determining a second resource for the second device to access the first cell. The fourth information includes a reference value, and the reference value may be a random number generated by the second device and/or an identifier of the second device.

According to this embodiment of this application, the second resource for accessing the first cell may be determined based on the resource configuration information that is used for accessing the first cell and that is indicated by the second information of the first device, and the reference value indicated by the fourth information of the second device, so that second devices can separately perform cell access by using different frequency resources. Concurrent access through a plurality of frequency resources is introduced, so that an access capacity is increased. This reduces duration of waiting for access and communication by the second device in wireless communication, reduces power consumption during waiting for communication, and improves energy efficiency.

S303: Determine, based on the first information and the third information, whether access to the first cell is allowed, or the first resource for accessing the first cell.

The first device sends the first information to the second device, and correspondingly, the second device receives the first information from the first device. In this case, the second device determines, based on the first information and the third information, whether access to the first cell is allowed, or the first resource for accessing the first cell.

The third information is determined based on information for measuring energy of the second device.

Optionally, the information for measuring energy of the second device may specifically include one or more of the following: information about a charging speed of the second device, information about a discharging speed of the second device, information about remaining operation duration of the second device, information about remaining power of the second device, information about a power supply type of the second device, information about a capacitance of the second device, information about energy needed for activating the second device, information about a ratio of communication duration to charging duration of the second device, and the like. Alternatively, the third information may be determined based on information that describes a coverage status of the first device and the second device, for example, measurement information of the second device and information about a distance between the first device and the second device. The listed information is separately described below.

The information about a charging speed of the second device and the information about a discharging speed of the second device: This parameter may be a ratio of a charging speed to a discharging speed. The charging speed may indicate an increased amount of power per unit time. The discharging speed may indicate a decreased amount of power per unit time. The ratio of the charging speed to the discharging speed may indicate an energy storage capability of the second device. A larger value indicates a stronger energy storage capability of the second device. It can be understood that the ratio of the charging speed to the discharging speed may be a value, or the ratio of the charging speed to the discharging speed may be a value range.

The information about remaining operation duration of the second device: This parameter may be remaining operation duration, to be specific, operation duration with remaining power of the second device based on an assumed service model. The assumed service model may be determined based on a type of a historical service performed by the second device, or may be determined based on a preconfigured service type. For example, a data packet with a specified size is sent or received based on a specified periodicity. It can be understood that the remaining operation duration may be a value, or the remaining operation duration may be a value range.

The information about remaining power of the second device: This parameter may be remaining power. It can be understood that the remaining power may be a value, or the remaining power may be a value range. For example, this parameter may be 0% to 20%, or this parameter may be 20% to 40%, or this parameter may be 40% to 60%, or this parameter may be 60% to 80%.

The information about a power supply type of the second device: This parameter may be a power supply type. Optionally, the power supply type may be solar energy, wind energy, vibration energy, temperature difference energy, a radio frequency signal, or the like. Alternatively, the power supply type may be power supply with a battery, power supply without a battery, power supply with a rechargeable battery, or power supply with a non-rechargeable battery, or the like.

The information about a capacitance of the second device: This parameter may be a capacitance. Assuming that the second device has an energy storage capacitor, this parameter may be a capacitance of the energy storage capacitor, for example, 50 mF or 200 mF. It can be understood that the capacitance may be a value, or the capacitance may be a value range.

The information about energy needed for activating the second device: This parameter may be an activation threshold. The activation threshold is a minimum operation threshold needed for a circuit of the second device to operate. For example, the activation threshold may be -20 dBm or -30 dBm. It can be understood that the activation threshold may be a value, or the activation threshold may be a value range.

The information about a ratio of communication duration to charging duration of the second device: This parameter may be a ratio of communication duration to charging duration. It can be understood that the ratio of communication duration to charging duration may be a value, or the ratio of communication duration to charging duration may be a value range.

The measurement information of the second device: This parameter may be a measurement quantity of the second device. The measurement quantity of the second device may include but is not limited to reference signal received power (reference signal received power, RSRP), reference signal received quality (reference signal received quality, RSRQ), a received signal strength indicator (received signal strength indicator, RSSI), or a signal to interference plus noise ratio (signal to interference plus noise ratio, SINR). It can be understood that the measurement quantity of the second device may be a value, or the measurement quantity of the second device may be a value range.

It can be understood that the third information may include one or more parameters, and the one or more parameters are related to the foregoing information for measuring energy and/or coverage of the second device.

It can be understood that the third information may alternatively include one or more functions, and the one or more functions are related to the foregoing information for measuring energy and/or coverage of the second device.

In addition, it can be learned from step S301 that the first information includes related information for accessing the first cell.

Optionally, the first information may include at least one of condition information for accessing the first cell or resource configuration information for accessing the first cell. Specifically, for descriptions of the condition information and the resource configuration information, refer to the descriptions in step S301. Details are not described herein again.

In a possible embodiment, when the first information includes the condition information for accessing the first cell, the second device determines, based on the condition information for accessing the first cell and the third information, whether the second device is to access the first cell.

Specifically, the condition information for accessing the first cell may include a threshold and cell access barring indication information, and the second device determines a level of the second device based on the third information and the threshold included in the condition information for accessing the first cell. A higher level of the second device indicates more energy of the second device, or indicates a lower energy consumption speed of the second device, and further indicates a larger access waiting delay allowed by the second device. The second device may determine, based on the cell access barring indication information included in the condition information for accessing the first cell and the level of the second device, whether the first device allows the second device to access the first cell, and therefore determine whether the second device is to access the first cell. This can avoid an access conflict caused by simultaneous access to the first cell by all second devices, and can further avoid high energy consumption caused by long time for waiting for communication by some second devices in wireless communication due to an access conflict.

Optionally, when the level of the second device is less than a first threshold indicated by the condition information, the second device determines to access the first cell; or when the level of the second device is greater than or equal to a second threshold indicated by the condition information, the second device determines not to access the first cell, where the first threshold is less than or equal to the second threshold.

It can be understood that the condition information for accessing the first cell may indicate specific second devices that are allowed to access the first cell. Specifically, specific levels of second devices that are allowed to access the first cell may be indicated by a threshold, or specific levels of second devices that are not allowed to access the first cell may be indicated by a threshold. For example, the condition information indicates, by using the first threshold, that a second device at a level less than the first threshold is allowed to access the first cell. The level of the second device being less than the first threshold indicated by the condition information indicates that energy of the second device is small, or indicates that an energy consumption speed of the second device is high, and further indicates that an access waiting delay allowed by the second device is small. In this case, the second device determines to access the first cell. Alternatively, the condition information indicates, by using the second threshold, that a second device at a level greater than or equal to the second threshold is not allowed to access the first cell. The level of the second device being greater than or equal to the second threshold indicated by the condition information indicates that energy of the second device is large, or indicates that an energy consumption speed of the second device is low, and further indicates that an access waiting delay allowed by the second device is large. In this case, the second device determines not to access the first cell.

According to this embodiment of this application, whether access to the first cell is allowed may be determined based on the level of the second device and the condition information that is used for accessing the first cell and that is indicated by the first information of the first device. This implements time-division access of second devices, and therefore reduces duration of waiting for communication by the second device in wireless communication, reduces power consumption during waiting for communication, and improves energy efficiency.

With reference to an example, the following further describes how to determine, based on the first information and the third information, whether the second device is to access the first cell in this embodiment of this application. An example is as follows:
Device levels are divided based on three thresholds: T1, T2, and T3. The three thresholds meet the following condition: T1<T2<T3. If an energy value determined by the second device based on the third information is greater than T3, the second device determines that the level of the second device is 3. Otherwise, if an energy value determined by the second device based on the third information is greater than T2, the second device determines that the level of the second device is 2. Otherwise, if an energy value determined by the second device based on the third information is greater than T1, the second device determines that the level of the second device is 1. Otherwise, the second device determines that the level of the second device is 0. It can be understood that a second device at a high level tolerates a large access waiting delay, and a second device at a low level tolerates a small access waiting delay.

The condition information for accessing the first cell may indicate specific levels of second devices that are allowed to access the first cell. Specifically, the condition information for accessing the first cell may indicate that a second device at a specific level is allowed to access the first cell, or may indicate that second devices at a plurality of levels are allowed to access the first cell. For example, four levels are used as an example. The condition information for accessing the first cell may include two bits. 00 indicates that a device at a level 1 is allowed to access the first cell. 01 indicates that a device at a level 2 is allowed to access the first cell. 10 indicates that a device at a level 3 is allowed to access the first cell. 11 indicates that a device at a level 4 is allowed to access the first cell. For another example, the condition information for accessing the first cell may alternatively include four bits, and each bit corresponds to a level. A value of the bit corresponding to the level being 1 indicates that a device at the level is prohibited from accessing the first cell. A value of the bit corresponding to the level being 0 indicates that a device at the level is allowed to access the first cell.

For example, when the first threshold indicated by the condition information is 2 and the level of the second device is 1, the second device determines to access the first cell.

For another example, when the first threshold indicated by the condition information is 2 and the level of the second device is 3, the second device determines not to access the first cell.

In a possible embodiment, when the first information includes the resource configuration information for accessing the first cell, the second device determines, based on the resource configuration information for accessing the first cell and the third information, the first resource for the second device to access the first cell, where the first resource is used for communicating with the first device.

Specifically, the second device determines the level of the second device based on the third information and the threshold included in the first information. A higher level of the second device indicates more energy of the second device, or indicates a lower energy consumption speed of the second device, and further indicates a larger access waiting delay allowed by the second device. The second device may determine, based on the level of the second device and the resource configuration information that is used for accessing the first cell and that is included in the first information, the first resource for the second device to access the first cell, so that a second device with a high access requirement can preferentially access the first cell for communication. This reduces duration of waiting for communication by the second device in wireless communication, reduces power consumption during waiting for communication, and improves energy efficiency.

Optionally, the second device determines a correspondence between a device level and an access resource based on the resource configuration information and the level of the second device. The correspondence between the device level and the access resource may include a mapping relationship between an access occasion corresponding to the access resource and the device level. Specifically, a higher device level indicates more energy of the device, or indicates a lower energy consumption speed of the device, and further indicates a larger access waiting delay allowed by the device and a later access occasion corresponding to an access resource corresponding to the device level. The second device determines, based on the correspondence, the first resource corresponding to the level of the second device.

It can be understood that the resource configuration information for accessing the first cell may be used to control, based on different access resources, a time sequence in which second devices access the first cell. Specifically, a correspondence between access occasions corresponding to different access resources and second devices at different levels may be configured, to control a time sequence in which second devices access the first cell. The second device determines a correspondence between a device level and an access resource based on the resource configuration information and the level of the second device. The correspondence between the device level and the access resource may include a mapping relationship between an access occasion corresponding to the access resource and the device level. Specifically, a higher device level indicates more energy of the device, or indicates a lower energy consumption speed of the device, and further indicates a larger access waiting delay allowed by the device and a later access occasion corresponding to an access resource corresponding to the device level. The second device determines, based on the correspondence between the device level and the access resource, the first resource corresponding to the level of the second device.

According to this embodiment of this application, the first resource for accessing the first cell may be determined based on the level of the second device and the resource configuration information that is used for accessing the first cell and that is indicated by the first information of the first device. This implements time-division access of second devices, and therefore reduces duration of waiting for communication by the second device in wireless communication, reduces power consumption during waiting for communication, and improves energy efficiency.

With reference to an example, the following further describes how to determine, based on the first information and the third information, the first resource for the second device to access the first cell in this embodiment of this application. An example is as follows:
Device levels are divided based on three thresholds: T1, T2, and T3. The three thresholds meet the following condition: T1<T2<T3. If an energy value determined by the second device based on the third information is greater than T3, the second device determines that the level of the second device is 3. Otherwise, if an energy value determined by the second device based on the third information is greater than T2, the second device determines that the level of the second device is 2. Otherwise, if an energy value determined by the second device based on the third information is greater than T1, the second device determines that the level of the second device is 1. Otherwise, the second device determines that the level of the second device is 0. It can be understood that a second device at a high level tolerates a large access waiting delay, and a second device at a low level tolerates a small access waiting delay.

The resource configuration information for accessing the first cell may control, based on different access resources, a time sequence in which second devices access the first cell. Specifically, the resource configuration information for accessing the first cell may include a first parameter, and the first parameter is used for the second device to generate a random number. The second device receives the first parameter, and the second device may select a random number from a range of (A, B). A is determined based on the first parameter, or B is determined based on the first parameter, or A and B are determined based on the first parameter. A may be 0, and A is less than B. B may be obtained by subtracting 1 from the first parameter, or B may be obtained by subtracting 1 from a second power of the first parameter. For example, the resource configuration information for accessing the first cell may include a first parameter Q, the second device selects a random number from (0, 2^{Q}-1), and the second device may store the random number to a slot counter of the second device. For a subsequent process, refer to the descriptions in step 2 shown in FIG. 2. Details are not described herein again. Assuming that the first parameter Q configured by the first device is 5, the second device determines, based on the level of the second device and the first parameter Q, that a value range of a random number to be generated by the second device is (0, 2⁵-1). In this case, a second device at the level 0 selects a random number from a range of 0 to 7, and stores the random number to a slot counter; a second device at the level 1 selects a random number from a range of 8 to 15, and stores the random number to a slot counter; a second device at the level 2 selects a random number from a range of 16 to 23, and stores the random number to a slot counter; and a second device at the level 3 selects a random number from a range of 24 to 31, and stores the random number to a slot counter. When a second device receives QueryRep signaling, a value of a slot counter of the second device is decreased by 1. Only a second device with a slot counter whose value is 0 can send an RN16 to the first device, determine a first resource corresponding to a level of the second device, and communicate with the first device.

In a possible embodiment, a second device sends information about the second device to a first device.

Specifically, FIG. 4 is a schematic flowchart of a communication method according to an embodiment of this application.

As shown in FIG. 4, a second device sends information about the second device to a first device, and correspondingly, the first device receives the information about the second device that is sent by the second device (refer to step S401). The first device determines first information based on the information about the second device (refer to step S402).

The information about the second device includes information for measuring energy and/or coverage of the second device. The first information includes at least one of condition information for accessing the first cell and resource configuration information for accessing the first cell. The information about the second device includes information for measuring energy and/or coverage of the second device, and may specifically include at least one of the following: information about a charging speed of the second device, information about a discharging speed of the second device, information about remaining operation duration of the second device, information about remaining power of the second device, information about a power supply type of the second device, information about a capacitance of the second device, information about energy needed for activating the second device, information about a ratio of communication duration to charging duration of the second device, measurement information of the second device, and the like.

For specific descriptions of the information for measuring energy and/or coverage of the second device and the first information, refer to the descriptions in step S303. Details are not described herein again.

It can be understood that the first information determined based on the information about the second device incorporates an energy status and/or a coverage status of the second device, so that related information for accessing the first cell that is delivered by the first device can be more accurate.

According to this embodiment of this application, the condition information for accessing the first cell or the resource configuration information for accessing the first cell that is obtained can be more accurate based on the information about the second device that is sent by the second device, so that the second device can determine, based on the more accurate condition information for accessing the first cell, whether to access the first cell, or the second device can determine, based on the more accurate resource configuration information for accessing the first cell, a first resource for accessing the first cell.

S304: Determine, based on the second information and the fourth information, the second resource for accessing the first cell.

The first device sends the second information to the second device, and correspondingly, the second device receives the second information from the first device. In this case, the second device determines, based on the second information and the fourth information, the second resource for accessing the first cell.

The fourth information includes a reference value, and the reference value may be a random number generated by the second device and/or an identifier of the second device. A manner of determining the random number generated by the second device is as follows: The second device determines the random number based on the second parameter, where the second parameter is sent by the first device to the second device. The second device receives the second parameter, and the second device may select a random number from a range of (C, D). C is determined based on the first parameter, or D is determined based on the first parameter, or C and D are determined based on the first parameter. C may be 0, and C is less than D. D may be obtained by subtracting 1 from the first parameter, or D may be obtained by subtracting 1 from a second power of the first parameter. For example, the second device receives query signaling from the first device, where the query signaling includes Q, and Q is the second parameter. The second device selects a random number from (0, 2^{Q}-1), and the second device may store the random number to a slot counter of the second device. In addition, it can be learned from step S301 that the second information includes the resource configuration information for accessing the first cell, and the resource configuration information includes information about two or more frequency resources. For specific descriptions of the second information, refer to the descriptions in step S301. Details are not described herein again.

It can be understood that steps S304 and S303 are optional steps, and a corresponding step may be specifically performed based on information received by the second device. Optionally, when the second device receives the first information sent by the first device, the second device performs step S303; or when the second device receives the second information sent by the first device, the second device performs step S304.

In a possible embodiment, the second device may select, from the two or more frequency resources, a frequency resource corresponding to the reference value as the second resource for accessing the first cell.

Optionally, when the reference value is within a first range, a first frequency resource corresponding to the first range is determined as the second resource for accessing the first cell; or when the reference value is within a second range, a second frequency resource corresponding to the second range is determined as the second resource for accessing the first cell; or the like.

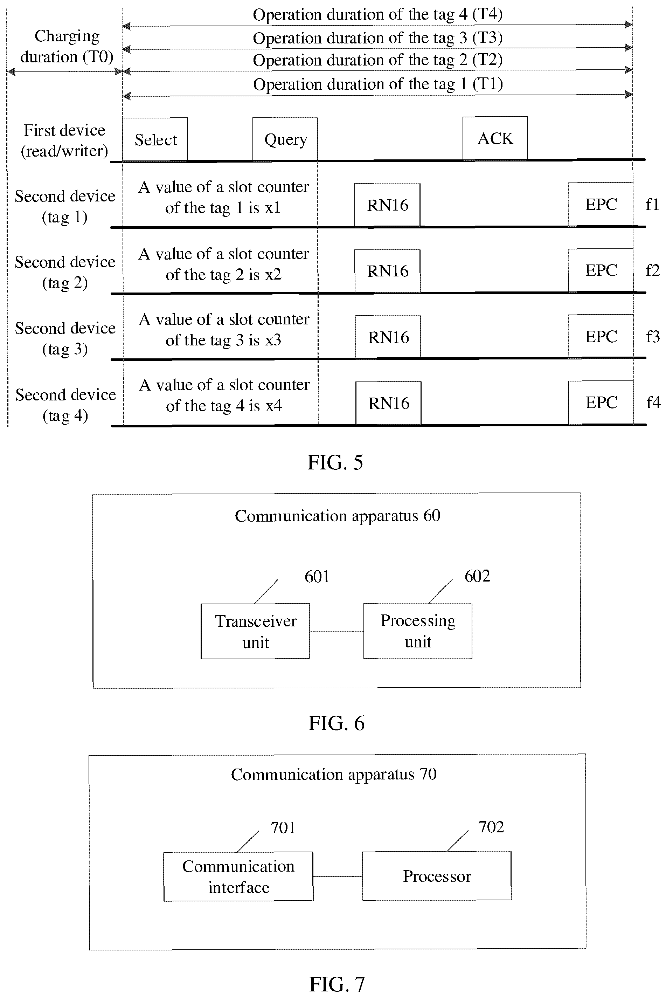

Specifically, FIG. 5 is a diagram of RFID communication according to an embodiment of this application.

FIG. 5 shows a process of RFID communication between a first device (a reader/writer) and at least one second device (including but not limited to a tag 1, a tag 2, a tag 3, and a tag 4). A specific process is as follows.

Step 1: a tag selection process

The first device (the reader/writer) first sends select (Select) signaling, to use the select signaling to select a specific tag or tag group, namely, at least one second device, for inventory and access.

Step 2: a tag inventory process

The second device receives query (Query) signaling from the first device (the reader/writer), where a parameter of the query signaling includes Q. A to-be-inventoried second device selects a random number from a range of (0, 2^{Q}-1) and packages the random number into a slot counter of the second device. In this case, a second device that selects a non-zero value switches to an arbitration state, and a second device that selects a zero value enters a response state, and returns an RN16. Then the first device (the reader/writer) returns an ACK command that includes a same RN16 to acknowledge the tag. The acknowledged second device switches to an acknowledged state and returns an EPC, to complete a basic information inventory process for the second device.

With reference to FIG. 5 and step S304, the following provides several examples to further describe how to determine, based on the second information and the fourth information, the second resource for accessing the first cell in this embodiment of this application.

### Example 1:

The second device generates a random number K based on a Q value, and determines an access resource for the second device. It is assumed that the resource configuration information for accessing the first cell that is sent by the first device includes information about four frequency resources: f1, f2, f3, and f4. It is assumed that a Q value sent by the first device is 5. A random number generated by the second device within a range of (0, 2⁵-1) is K. If a value range of K is 0 to 7, the second device determines that the second resource for the second device to access the first cell is f1. If a value range of K is 8 to 15, the second device determines that the second resource for the second device to access the first cell is f2. If a value range of K is 16 to 23, the second device determines that the second resource for the second device to access the first cell is f3. If a value range of K is 24 to 31, the second device determines that the second resource for the second device to access the first cell is f4. When the second device receives QueryRep signaling, a slot counter of the second device is decreased by 1. In this example, a second device whose slot counter is 0 may access the first cell on the frequency resource f1, a second device whose slot counter is 8 may access the first cell on the frequency resource f2, a second device whose slot counter is 16 may access the first cell on the frequency resource f3, and a second device whose slot counter is 24 may access the first cell on the frequency resource f4.

### Example 2:

The second device generates a random number K based on a Q value, and determines an access resource for the second device. It is assumed that the resource configuration information for accessing the first cell that is sent by the first device includes information about four frequency resources: f1, f2, f3, and f4. It is assumed that a Q value sent by the first device is 5. A random number generated by the second device within a range of (0, 2⁵-1) is K. If K mod 4 is equal to 0, the second device determines that the second resource for the second device to access the first cell is f1. If K mod 4 is equal to 1, the second device determines that the second resource for the second device to access the first cell is f2. If K mod 4 is equal to 2, the second device determines that the second resource for the second device to access the first cell is f3. If K mod 4 is equal to 3, the second device determines that the second resource for the second device to access the first cell is f4. mod indicates a modulo operation. When the second device receives QueryRep signaling, a slot counter of the second device is decreased by 4. In this example, a second device whose slot counter is 0 may access the first cell on the frequency resource f1, a second device whose slot counter is 1 may access the first cell on the frequency resource f2, a second device whose slot counter is 2 may access the first cell on the frequency resource f3, and a second device whose slot counter is 3 may access the first cell on the frequency resource f4.

### Example 3:

The second device determines an access resource for the second device based on the identifier of the second device. It is assumed that the resource configuration information for accessing the first cell that is sent by the first device includes information about four frequency resources: f1, f2, f3, and f4. If the identifier of the second device mod 4 is equal to 0, the second device determines that the second resource for the second device to access the first cell is f1. If the identifier of the second device mod 4 is equal to 1, the second device determines that the second resource for the second device to access the first cell is f2. If the identifier of the second device mod 4 is equal to 2, the second device determines that the second resource for the second device to access the first cell is f3. If the identifier of the second device mod 4 is equal to 3, the second device determines that the second resource for the second device to access the first cell is f4. mod indicates a modulo operation. When the second device receives QueryRep signaling, a slot counter of the second device is decreased by 4. In this example, a second device whose slot counter is 0 may access the first cell on the frequency resource f1, a second device whose slot counter is 1 may access the first cell on the frequency resource f2, a second device whose slot counter is 2 may access the first cell on the frequency resource f3, and a second device whose slot counter is 3 may access the first cell on the frequency resource f4. The identifier of the second device may be an EPC or an RN16.

In addition, in another possible embodiment, the first device sends, to the second device, resource configuration information for accessing the first cell and a Q value. The resource configuration information for accessing the first cell includes N access frequency resources, and N is an integer greater than or equal to 2. The second device randomly selects one access frequency resource from the N access frequency resources. Then the second device accesses the first cell on the selected access frequency resource. When the second device receives QueryRep signaling, a slot counter of the second device is decreased by 1. In this embodiment, a second device whose slot counter is 0 may access the first cell at a selected access frequency. A difference between this manner and the foregoing example 1, example 2, and example 3 lies in that the second device needs to additionally generate a random number when determining an access frequency resource. This is because the second device needs to select, based on the random number, one access frequency resource from the N access frequency resources to access the first cell.

According to this embodiment of this application, different second devices may select, from the two or more frequency resources, frequency resources respectively corresponding to reference values of the devices as resources for accessing the first cell, so that second devices can separately perform cell access by using different frequency resources. Concurrent access through a plurality of frequency resources is introduced, so that an access capacity is increased. This reduces duration of waiting for access and communication by the second device in wireless communication, reduces power consumption during waiting for communication, and improves energy efficiency.

In all embodiments of this application, optionally, the second device may further send third capability information to the first device.

Correspondingly, the first device may receive the third capability information from the second device.

The third capability information may include at least one of the following: whether energy collection is supported, whether a low-power receiver is supported, and whether backscatter communication is supported.

In a possible manner, the third capability information includes that the second device supports energy collection.

That the second device supports energy collection may mean that the second device can autonomously obtain energy from an environment, and may convert the energy into electric energy. A source of the energy may include at least one of the following: light, a radio wave, a temperature difference, vibration, motion, a salinity gradient, wind, and water flow.

It should be understood that an advantage of energy collection is to supply power to a device as a substitute for a battery or supplement energy for a battery, to extend service life of the device. The second device may provide, for a signal processing circuit or a data storage circuit of the second device, energy generated through energy collection, to maintain a normal operation state.

In another possible manner, the third capability information includes that the second device supports a low-power receiver.

It should be understood that the low-power receiver can avoid use of a radio frequency module with high power consumption, for example, a frequency mixer with high linearity or a voltage-controlled oscillator that can provide a precise local oscillator signal. Therefore, the low-power receiver can achieve a low power consumption level.

That the second device supports a low-power receiver may mean that the second device supports reception of a signal in an incoherent reception mode.

For example, the signal may be a signal from the first device.

For example, the incoherent reception mode may be envelope detection, differential demodulation, or the like.

For example, when the incoherent reception mode is envelope detection, in the envelope detection, half-wave or full-wave rectification may be performed on a received high-frequency or intermediate-frequency signal to obtain an envelope or an amplitude line of a low-frequency raw signal.

In this manner, the second device may receive a signal in a reception mode of envelope detection, to obtain an envelope of a raw signal. After performing digital sampling on the envelope of the raw signal, the second device may perform comparison with an amplitude or an energy threshold specified by the second device, to determine whether the received signal is 1 or 0. It should be understood that the second device may alternatively determine, in another manner, whether the received signal is 1 or 0. This is not specifically limited in embodiments of this application.

That the second device supports a low-power receiver may mean that the second device has a low-power receiver, or the second device has both a low-power receiver and a conventional receiver.

It should be understood that the conventional receiver is different from the low-power receiver. The conventional receiver may have a superheterodyne and zero-intermediate-frequency or low-intermediate-frequency receiver architecture that can support coherent reception. The conventional receiver needs to use some high-performance and high-precision module circuits, such as a low noise amplifier with a high gain and high linearity, a frequency mixer with high linearity, or a voltage-controlled oscillator that can provide a precise local oscillator signal, to ensure reception performance of the receiver. These module circuits have high power consumption. Within specific duration, power consumption of the conventional receiver is higher than power consumption of the low-power receiver.

It should be further understood that, when the second device has both a low-power receiver and a conventional receiver, the second device may turn off the conventional receiver and turn on the low-power receiver to achieve energy saving effect.

It should be further understood that, when the second device has both a low-power receiver and a conventional receiver, the second device may receive a wake-up signal by using the low-power receiver, and trigger startup of the conventional receiver by using the wake-up signal. The wake-up signal may be sent by the first device.

In another possible manner, the third capability information includes that the second device supports backscatter communication.

That the second device supports backscatter communication may mean that the second device supports sending information to the first device when there is no radio frequency link for active transmission. Alternatively, that the second device supports backscatter communication may mean that the second device supports sending information to the first device when the second device has a radio frequency link for active transmission but the radio frequency link does not need to be turned on. To be specific, the second device performs modulation mainly depending on a continuous carrier transmitted by the first device or an excitation device other than the first device.

For example, the second device may reflect a part or all of an incident carrier by adjusting impedance of an antenna of the second device. For another example, the second device may not reflect an incident carrier by adjusting impedance of an antenna of the second device. For another example, the second device may absorb energy of an incident carrier.

In this manner, the second device may modulate digital information onto an incident carrier by adjusting the impedance of the antenna of the second device, and send the carrier to the first device.

Optionally, a maximum bandwidth supported by the second device is limited.

In a possible manner, a maximum uplink bandwidth supported by the second device does not exceed X1.

For example, X1 may be a specific value. For example, X1 may be 20 MHz, or X1 may be 5 MHz, or X1 may be 3 MHz, or X1 may be 1.4 MHz, or X1 may be 1 MHz, or X1 may be 720 kHz, or X1 may be 540 kHz, or X1 may be 360 kHz, or X1 may be 180 kHz.

For example, X1 may be a bandwidth occupied by K1 resource blocks, and K1 is a positive integer. For example, K1 may be a positive integer less than or equal to 11, or K1 may be a positive integer less than or equal to 25, or K1 may be a positive integer less than or equal to 51, or K1 may be a positive integer less than or equal to 106.

In another possible manner, a maximum downlink bandwidth supported by the second device does not exceed Y1.

For example, Y1 may be a specific value. For example, Y1 may be 20 MHz, or Y1 may be 5 MHz, or Y1 may be 3 MHz, or Y1 may be 1.4 MHz, or Y1 may be 1 MHz, or Y1 may be 720 kHz, or Y1 may be 540 kHz, or Y1 may be 360 kHz, or Y1 may be 180 kHz.

For example, Y1 may be a bandwidth occupied by K2 resource blocks, and K2 is a positive integer. For example, K2 may be a positive integer less than or equal to 11, or K2 may be a positive integer less than or equal to 25, or K2 may be a positive integer less than or equal to 51, or K2 may be a positive integer less than or equal to 106.

Optionally, the maximum uplink bandwidth supported by the second device is less than or equal to the maximum downlink bandwidth supported by the second device.

Optionally, a quantity of transmit antennas and/or a quantity of receive antennas supported by the second device are limited.

In a possible manner, the quantity of receive antennas supported by the second device does not exceed X2.

For example, X2 may be a specific value. For example, X2 may be 1, or X2 may be 2, or X2 may be 4.

In another possible manner, a quantity of branches of a receive antenna supported by the second device does not exceed X3.

For example, X3 may be a specific value. For example, X3 may be 1, or X3 may be 2, or X3 may be 4.

In another possible manner, the quantity of receive antennas supported by the second device does not exceed Y2.

For example, Y2 may be a specific value. For example, Y2 may be 1, or Y2 may be 2, or Y2 may be 4.

In another possible manner, a quantity of branches of a transmit antenna supported by the second device does not exceed Y3.

For example, Y3 may be a specific value. For example, Y3 may be 1, or Y3 may be 2, or Y3 may be 4.

Optionally, the quantity of transmit antennas supported by the second device is greater than or equal to the quantity of receive antennas supported by the second device.

Optionally, the quantity of branches of the transmit antenna supported by the second device is greater than or equal to the quantity of branches of the receive antenna supported by the second device.

It should be understood that the "quantity of branches of the receive antenna" may be expressed as a "quantity of radio frequency channels of the receive antenna", or may be expressed as a "quantity of radio frequency links of the receive antenna", and the "quantity of branches of the transmit antenna" may be expressed as a "quantity of radio frequency channels of the transmit antenna", or may be expressed as a "quantity of radio frequency links of the transmit antenna".

Optionally, the second device cannot simultaneously perform downlink reception and uplink transmission in a serving cell that has a paired spectrum.

The foregoing describes in detail the methods provided in embodiments of this application. The following provides an apparatus for implementing any one of the methods in embodiments of this application. For example, an apparatus including units (or means) for implementing steps performed by a device in any one of the foregoing methods is provided.

FIG. 6 is a diagram of a structure of a communication apparatus according to an embodiment of this application.

As shown in FIG. 6, the communication apparatus 60 may include a transceiver unit 601 and a processing unit 602. The transceiver unit 601 and the processing unit 602 may be software, hardware, or a combination of software and hardware.

The transceiver unit 601 may implement a sending function and/or a receiving function, and the transceiver unit 601 may also be described as a communication unit. The transceiver unit 601 may alternatively be a unit integrating an obtaining unit and a sending unit. The obtaining unit is configured to implement a receiving function, and the sending unit is configured to implement a sending function. Optionally, the transceiver unit 601 may be configured to receive information sent by another apparatus, and may be further configured to send information to another apparatus.

In a possible design, the communication apparatus 60 may correspond to the first device in the method embodiments shown in FIG. 3 and FIG. 4. For example, the communication apparatus 60 may be the first device, or may be a chip in the first device. The communication apparatus 60 may include units for performing the operations performed by the first device in the method embodiments shown in FIG. 3 and FIG. 4. In addition, the units in the communication apparatus 60 separately implement the operations performed by the first device in the method embodiments shown in FIG. 3 and FIG. 4. The units are described as follows.

The processing unit 602 is configured to obtain first information, where the first information includes at least one of condition information for accessing a first cell and resource configuration information for accessing the first cell.

The transceiver unit 601 is configured to send the first information to a second device, where the first information is used for the second device to determine whether access to the first cell is allowed, or the first information is used for the second device to determine a first resource for accessing the first cell, and the first resource is used for the second device to communicate with the communication apparatus.

In a possible implementation, that the first information is used for the second device to determine whether access to the first cell is allowed, or the first information is used for the second device to determine a first resource for accessing the first cell includes:
The first information and third information are used for the second device to determine whether access to the first cell is allowed, or the first information and the third information are used for the second device to determine the first resource for accessing the first cell.

The third information is determined based on at least one of the following:
information about a charging speed of the second device, information about a discharging speed of the second device, information about remaining operation duration of the second device, information about remaining power of the second device, information about a power supply type of the second device, information about a capacitance of the second device, information about energy needed for activating the second device, information about a ratio of communication duration to charging duration of the second device, and measurement information of the second device.

In a possible implementation, the transceiver unit 601 is further configured to receive information about the second device, where the information about the second device includes at least one of the following:
information about a charging speed of the second device, information about a discharging speed of the second device, information about remaining operation duration of the second device, information about remaining power of the second device, information about a power supply type of the second device, information about a capacitance of the second device, information about energy needed for activating the second device, information about a ratio of communication duration to charging duration of the second device, and measurement information of the second device.

In a possible implementation, the processing unit 602 is further configured to determine the first information based on the information about the second device.

In another possible design, the communication apparatus 60 may correspond to the second device in the method embodiments shown in FIG. 3 and FIG. 4. For example, the communication apparatus 60 may be the second device, or may be a chip in the second device. The communication apparatus 60 may include units for performing the operations performed by the second device in the method embodiments shown in FIG. 3 and FIG. 4. In addition, the units in the communication apparatus 60 separately implement the operations performed by the second device in the method embodiments shown in FIG. 3 and FIG. 4. The units are described as follows.

The transceiver unit 601 is configured to receive first information from a first device, where the first information includes related information for accessing a first cell.

The processing unit 602 is configured to determine, based on the first information, whether access to the first cell is allowed, or a first resource for accessing the first cell, where the first resource is used for communicating with the first device.

In a possible implementation, the first information includes at least one of the following:
condition information for accessing the first cell and resource configuration information for accessing the first cell.

In a possible implementation, the processing unit 602 is specifically configured to determine, based on the first information and third information, whether access to the first cell is allowed, or the first resource for accessing the first cell.

The third information is determined based on at least one of the following:
information about a charging speed of the communication apparatus, information about a discharging speed of the communication apparatus, information about remaining operation duration of the communication apparatus, information about remaining power of the communication apparatus, information about a power supply type of the communication apparatus, information about a capacitance of the communication apparatus, information about energy needed for activating the communication apparatus, information about a ratio of communication duration to charging duration of the communication apparatus, and measurement information of the communication apparatus.

In a possible implementation, the processing unit 602 is further configured to determine a level of the communication apparatus based on the first information and the third information; and
the processing unit 602 is further configured to determine, based on the first information and the level of the communication apparatus, whether access to the first cell is allowed.

In a possible implementation, the processing unit 602 is further configured to: when the level of the communication apparatus is less than a first threshold indicated by the condition information, determine that access to the first cell is allowed; or
the processing unit 602 is further configured to: when the level of the communication apparatus is greater than or equal to a second threshold indicated by the condition information, determine that access to the first cell is not allowed, where the first threshold is less than or equal to the second threshold.

In a possible implementation, the processing unit 602 is further configured to determine a level of the communication apparatus based on the first information and the third information; and
the processing unit 602 is further configured to determine, based on the first information and the level of the communication apparatus, the first resource for accessing the first cell.

In a possible implementation, the processing unit 602 is further configured to determine a correspondence between a device level and an access resource based on the resource configuration information and the level of the communication apparatus; and
the processing unit 602 is further configured to determine, based on the correspondence, the first resource corresponding to the level of the communication apparatus.

In a possible implementation, the correspondence between the device level and the access resource includes a mapping relationship between an access occasion corresponding to the access resource and the device level.

In a possible implementation, the transceiver unit 601 is further configured to send information about the communication apparatus to the first device, where the information about the communication apparatus includes at least one of the following:
information about a charging speed of the communication apparatus, information about a discharging speed of the communication apparatus, information about remaining operation duration of the communication apparatus, information about remaining power of the communication apparatus, information about a power supply type of the communication apparatus, information about a capacitance of the communication apparatus, information about energy needed for activating the communication apparatus, information about a ratio of communication duration to charging duration of the communication apparatus, and measurement information of the communication apparatus.

In another possible design, the communication apparatus 60 may correspond to the first device in the method embodiment shown in FIG. 4. For example, the communication apparatus 60 may be the first device, or may be a chip in the first device. The communication apparatus 60 may include units for performing the operations performed by the first device in the method embodiment shown in FIG. 4. In addition, the units in the communication apparatus 60 separately implement the operations performed by the first device in the method embodiment shown in FIG. 4. The units are described as follows.

The transceiver unit 601 is configured to receive information about a second device that is sent by the second device, where the information about the second device includes at least one of the following:
information about a charging speed of the second device, information about a discharging speed of the second device, information about remaining operation duration of the second device, information about remaining power of the second device, information about a power supply type of the second device, information about a capacitance of the second device, information about energy needed for activating the second device, information about a ratio of communication duration to charging duration of the second device, and measurement information of the second device.

The processing unit 602 is configured to determine first information based on the information about the second device.

The transceiver unit 601 is further configured to send the first information to the second device, where the first information is used for the second device to determine whether access to a first cell is allowed, or the first information is used for the second device to determine a first resource for accessing the first cell, and the first resource is used for the communication apparatus to communicate with the second device.

In another possible design, the communication apparatus 60 may correspond to the second device in the method embodiment shown in FIG. 4. For example, the communication apparatus 60 may be the second device, or may be a chip in the second device. The communication apparatus 60 may include units for performing the operations performed by the second device in the method embodiment shown in FIG. 4. In addition, the units in the communication apparatus 60 separately implement the operations performed by the second device in the method embodiment shown in FIG. 4. The units are described as follows.

The processing unit 602 is configured to obtain information about the communication apparatus.

The transceiver unit 601 is configured to send the information about the communication apparatus to a first device, where the information about the communication apparatus includes at least one of the following:
information about a charging speed of the communication apparatus, information about a discharging speed of the communication apparatus, information about remaining operation duration of the communication apparatus, information about remaining power of the communication apparatus, information about a power supply type of the communication apparatus, information about a capacitance of the communication apparatus, information about energy needed for activating the communication apparatus, information about a ratio of communication duration to charging duration of the communication apparatus, and measurement information of the communication apparatus.

In another possible design, the communication apparatus 60 may correspond to the first device in the method embodiment shown in FIG. 3. For example, the communication apparatus 60 may be the first device, or may be a chip in the first device. The communication apparatus 60 may include units for performing the operations performed by the first device in the method embodiments shown in FIG. 3 and FIG. 4. In addition, the units in the communication apparatus 60 separately implement the operations performed by the first device in the method embodiments shown in FIG. 3 and FIG. 4. The units are described as follows.

The processing unit 602 is configured to obtain second information, where the second information includes information about two or more frequency resources for accessing a first cell.

The transceiver unit 601 is configured to send the second information to a second device, where the second information is used for the second device to determine a second resource for accessing the first cell, and the second resource is used for the second device to communicate with the communication apparatus.

In a possible implementation, that the second information is used for the second device to determine a second resource for accessing the first cell includes:
The second information and fourth information are used for the second device to determine the second resource for accessing the first cell, where the fourth information includes a reference value, and the reference value is a random number generated by the second device and/or an identifier of the second device.

In another possible design, the communication apparatus 60 may correspond to the second device in the method embodiment shown in FIG. 3. For example, the communication apparatus 60 may be the second device, or may be a chip in the second device. The communication apparatus 60 may include units for performing the operations performed by the second device in the method embodiments shown in FIG. 3 and FIG. 4. In addition, the units in the communication apparatus 60 separately implement the operations performed by the second device in the method embodiments shown in FIG. 3 and FIG. 4. The units are described as follows.

The transceiver unit 601 is configured to receive second information from a first device, where the second information includes resource configuration information for accessing a first cell, and the resource configuration information includes information about two or more frequency resources.

The processing unit 602 is configured to determine, based on the second information and fourth information, a second resource for accessing the first cell, where the fourth information includes a reference value, the reference value is a random number generated by the communication apparatus and/or an identifier of the communication apparatus, and the second resource is used for communicating with the first device.

In a possible implementation, the processing unit 602 is further configured to determine, from the two or more frequency resources according to a preset rule, a frequency resource corresponding to the reference value as the second resource.

In a possible implementation, the processing unit 602 is further configured to: when the reference value is within a first range, determine a first frequency resource as the second resource, where the first frequency resource is a frequency resource corresponding to the first range; or
the processing unit 602 is further configured to: when the reference value is within a second range, determine a second frequency resource as the second resource, where the second frequency resource is a frequency resource corresponding to the second range.

The first frequency resource and the second frequency resource are two different frequency resources among the two or more frequency resources.

According to this embodiment of this application, some or all of the units of the apparatus shown in FIG. 6 may be combined into one or more other units, or one (or more) of the units may be further divided into a plurality of smaller functional units. In this way, same operations can be implemented without affecting implementation of technical effect of embodiments of this application. The foregoing units are obtained through division based on logical functions. During actual application, a function of one unit may alternatively be implemented by a plurality of units, or functions of a plurality of units are implemented by one unit. In other embodiments of this application, an electronic device may further include other units. During actual application, the functions may alternatively be implemented with assistance of the other units, and may be implemented by a plurality of units in collaboration.

It should be noted that, for implementations of the units, reference may be further made to corresponding descriptions in the method embodiments shown in FIG. 3 and FIG. 4.

In the communication apparatus 60 described in FIG. 6, based on the first information sent by the first device and the third information of the second device, the second device can perform cell access according to an access requirement of the second device, and a second device with a high access requirement can preferentially access a cell for communication. This implements time-division access of second devices, and therefore reduces duration of waiting for communication by the second device in wireless communication, reduces power consumption during waiting for communication, and improves energy efficiency. Alternatively, based on the second information sent by the first device and the fourth information of the second device, second devices can separately perform cell access by using different frequency resources. Concurrent access through a plurality of frequency resources is introduced, so that an access capacity is increased. This reduces duration of waiting for access and communication by the second device in wireless communication, reduces power consumption during waiting for communication, and improves energy efficiency.

FIG. 7 is a diagram of a structure of a communication apparatus according to an embodiment of this application.

It should be understood that the communication apparatus 70 shown in FIG. 7 is merely an example. The communication apparatus in this embodiment of this application may alternatively include other components, or include components with functions similar to functions of components in FIG. 7, or does not necessarily need to include all components in FIG. 7.

The communication apparatus 70 includes a communication interface 701 and at least one processor 702.

The communication apparatus 70 may correspond to any network element or device of the first device and the second device. The communication interface 701 is configured to send and receive signals, and the at least one processor 702 executes program instructions, to enable the communication apparatus 70 to implement a corresponding process of a method performed by a corresponding device in the foregoing method embodiments.

In a possible design, the communication apparatus 70 may correspond to the first device in the method embodiments shown in FIG. 3 and FIG. 4. For example, the communication apparatus 70 may be the first device, or may be a chip in the first device. The communication apparatus 70 may include components for performing the operations performed by the first device in the foregoing method embodiments. In addition, the components in the communication apparatus 70 separately implement the operations performed by the first device in the foregoing method embodiments. Details may be as follows.

A first device obtains first information, where the first information includes at least one of condition information for accessing a first cell and resource configuration information for accessing the first cell.

The first device sends the first information to a second device, where the first information is used for the second device to determine whether access to the first cell is allowed, or the first information is used for the second device to determine a first resource for accessing the first cell, and the first resource is used for the second device to communicate with the first device.

In a possible implementation, that the first information is used for the second device to determine whether access to the first cell is allowed, or the first information is used for the second device to determine a first resource for accessing the first cell includes:
The first information and third information are used for the second device to determine whether access to the first cell is allowed, or the first information and the third information are used for the second device to determine the first resource for accessing the first cell.

The third information is determined based on at least one of the following:
information about a charging speed of the second device, information about a discharging speed of the second device, information about remaining operation duration of the second device, information about remaining power of the second device, information about a power supply type of the second device, information about a capacitance of the second device, information about energy needed for activating the second device, information about a ratio of communication duration to charging duration of the second device, and measurement information of the second device.

In a possible implementation, the method further includes:
The first device receives information about the second device, where the information about the second device includes at least one of the following:
information about a charging speed of the second device, information about a discharging speed of the second device, information about remaining operation duration of the second device, information about remaining power of the second device, information about a power supply type of the second device, information about a capacitance of the second device, information about energy needed for activating the second device, information about a ratio of communication duration to charging duration of the second device, and measurement information of the second device.

In a possible implementation, the method further includes:
The first device determines the first information based on the information about the second device.

In another possible design, the communication apparatus 70 may correspond to the second device in the method embodiments shown in FIG. 3 and FIG. 4. For example, the communication apparatus 70 may be the second device, or may be a chip in the second device. The communication apparatus 70 may include components for performing the operations performed by the second device in the foregoing method embodiments. In addition, the components in the communication apparatus 70 separately implement the operations performed by the second device in the foregoing method embodiments. Details may be as follows.

A second device receives first information from a first device, where the first information includes related information for accessing a first cell.

The second device determines, based on the first information, whether access to the first cell is allowed, or a first resource for accessing the first cell, where the first resource is used for communicating with the first device.

In a possible implementation, the first information includes at least one of the following:
condition information for accessing the first cell and resource configuration information for accessing the first cell.

In a possible implementation, the determining, based on the first information, whether access to the first cell is allowed, or a first resource for accessing the first cell includes:
determining, based on the first information and third information, whether access to the first cell is allowed, or the first resource for accessing the first cell.

The third information is determined based on at least one of the following:
information about a charging speed of the second device, information about a discharging speed of the second device, information about remaining operation duration of the second device, information about remaining power of the second device, information about a power supply type of the second device, information about a capacitance of the second device, information about energy needed for activating the second device, information about a ratio of communication duration to charging duration of the second device, and measurement information of the second device.

In a possible implementation, the first information includes the condition information for accessing the first cell, and the determining, based on the first information and third information, whether access to the first cell is allowed includes:
determining a level of the second device based on the first information and the third information; and
determining, based on the first information and the level of the second device, whether access to the first cell is allowed.

In a possible implementation, the determining, based on the first information and the level of the second device, whether access to the first cell is allowed includes:
When the level of the second device is less than a first threshold indicated by the condition information, the second device determines that access to the first cell is allowed; or
when the level of the second device is greater than or equal to a second threshold indicated by the condition information, the second device determines that access to the first cell is not allowed, where the first threshold is less than or equal to the second threshold.

In a possible implementation, the first information includes the resource configuration information for accessing the first cell, and the determining, based on the first information and third information, the first resource for accessing the first cell includes:
determining a level of the second device based on the first information and the third information; and
determining, based on the first information and the level of the second device, the first resource for accessing the first cell.

In a possible implementation, the determining, based on the first information and the level of the second device, the first resource for accessing the first cell includes:
determining a correspondence between a device level and an access resource based on the resource configuration information and the level of the second device; and
determining, based on the correspondence, the first resource corresponding to the level of the second device.

In a possible implementation, the correspondence between the device level and the access resource includes a mapping relationship between an access occasion corresponding to the access resource and the device level.

In a possible implementation, the method further includes:
The second device sends information about the second device to the first device, where the information about the second device includes at least one of the following:
information about a charging speed of the second device, information about a discharging speed of the second device, information about remaining operation duration of the second device, information about remaining power of the second device, information about a power supply type of the second device, information about a capacitance of the second device, information about energy needed for activating the second device, information about a ratio of communication duration to charging duration of the second device, and measurement information of the second device.

In a possible design, the communication apparatus 70 may correspond to the first device in the method embodiment shown in FIG. 4. For example, the communication apparatus 70 may be the first device, or may be a chip in the first device. The communication apparatus 70 may include components for performing the operations performed by the first device in the foregoing method embodiments. In addition, the components in the communication apparatus 70 separately implement the operations performed by the first device in the foregoing method embodiments. Details may be as follows.

A first device receives information about a second device that is sent by the second device, where the information about the second device includes at least one of the following:
information about a charging speed of the second device, information about a discharging speed of the second device, information about remaining operation duration of the second device, information about remaining power of the second device, information about a power supply type of the second device, information about a capacitance of the second device, information about energy needed for activating the second device, information about a ratio of communication duration to charging duration of the second device, and measurement information of the second device.

Optionally, the first device determines first information based on the information about the second device; and
the first device sends the first information to the second device, where the first information is used for the second device to determine whether access to a first cell is allowed, or the first information is used for the second device to determine a first resource for accessing the first cell, and the first resource is used for the first device to communicate with the second device.

In another possible design, the communication apparatus 70 may correspond to the second device in the method embodiment shown in FIG. 4. For example, the communication apparatus 70 may be the second device, or may be a chip in the second device. The communication apparatus 70 may include components for performing the operations performed by the second device in the foregoing method embodiments. In addition, the components in the communication apparatus 70 separately implement the operations performed by the second device in the foregoing method embodiments. Details may be as follows.

A second device obtains information about the second device.

The second device sends the information about the second device to a first device, where the information about the second device includes at least one of the following:
information about a charging speed of the second device, information about a discharging speed of the second device, information about remaining operation duration of the second device, information about remaining power of the second device, information about a power supply type of the second device, information about a capacitance of the second device, information about energy needed for activating the second device, information about a ratio of communication duration to charging duration of the second device, and measurement information of the second device.

In a possible design, the communication apparatus 70 may correspond to the first device in the method embodiment shown in FIG. 3. For example, the communication apparatus 70 may be the first device, or may be a chip in the first device. The communication apparatus 70 may include components for performing the operations performed by the first device in the foregoing method embodiments. In addition, the components in the communication apparatus 70 separately implement the operations performed by the first device in the foregoing method embodiments. Details may be as follows.

A first device obtains second information, where the second information includes information about two or more frequency resources for accessing a first cell.

The first device sends the second information to a second device, where the second information is used for the second device to determine a second resource for accessing the first cell, and the second resource is used for the second device to communicate with the first device.

In a possible implementation, that the second information is used for the second device to determine a second resource for accessing the first cell includes:
The second information and fourth information are used for the second device to determine the second resource for accessing the first cell, where the fourth information includes a reference value, and the reference value is a random number generated by the second device and/or an identifier of the second device.

In another possible design, the communication apparatus 70 may correspond to the second device in the method embodiment shown in FIG. 3. For example, the communication apparatus 70 may be the second device, or may be a chip in the second device. The communication apparatus 70 may include components for performing the operations performed by the second device in the foregoing method embodiments. In addition, the components in the communication apparatus 70 separately implement the operations performed by the second device in the foregoing method embodiments. Details may be as follows.

A second device receives second information from a first device, where the second information includes resource configuration information for accessing a first cell, and the resource configuration information includes information about two or more frequency resources.

The second device determines, based on the second information and fourth information, a second resource for accessing the first cell, where the fourth information includes a reference value, the reference value is a random number generated by the second device and/or an identifier of the second device, and the second resource is used for communicating with the first device.

In a possible implementation, that the second device determines, based on the second information and fourth information, a second resource for accessing the first cell includes:
The second device determines, from the two or more frequency resources according to a preset rule, a frequency resource corresponding to the reference value as the second resource.

In a possible implementation, that the second device determines, from the two or more frequency resources according to a preset rule, a frequency resource corresponding to the reference value as the second resource includes:
when the reference value is within a first range, determining a first frequency resource as the second resource, where the first frequency resource is a frequency resource corresponding to the first range; or
when the reference value is within a second range, determining a second frequency resource as the second resource, where the second frequency resource is a frequency resource corresponding to the second range.

The first frequency resource and the second frequency resource are two different frequency resources among the two or more frequency resources.

In the communication apparatus 70 described in FIG. 7, based on the first information sent by the first device and the third information of the second device, the second device can perform cell access according to an access requirement of the second device, and a second device with a high access requirement can preferentially access a cell for communication. This implements time-division access of second devices, and therefore reduces duration of waiting for communication by the second device in wireless communication, reduces power consumption during waiting for communication, and improves energy efficiency. Alternatively, based on the second information sent by the first device and the fourth information of the second device, second devices can separately perform cell access by using different frequency resources. Concurrent access through a plurality of frequency resources is introduced, so that an access capacity is increased. This reduces duration of waiting for access and communication by the second device in wireless communication, reduces power consumption during waiting for communication, and improves energy efficiency.

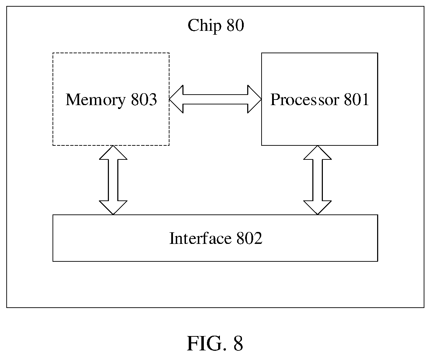

For a case in which the communication apparatus may be a chip or a chip system, refer to a diagram of a structure of a chip shown in FIG. 8.

As shown in FIG. 8, the chip 80 includes a processor 801 and an interface 802. There may be one or more processors 801, and there may be a plurality of interfaces 802. It should be noted that functions respectively corresponding to the processor 801 and the interface 802 may be implemented by using a hardware design, or may be implemented by using a software design, or may be implemented by using a combination of software and hardware. This is not limited herein.

Optionally, the chip 80 may further include a memory 803, and the memory 803 is configured to store necessary program instructions and data.

In this application, the processor 801 may be configured to invoke, from the memory 803, a program for implementing, on one or more devices or network elements of the first device and the second device, the communication method provided in one or more embodiments of this application, and execute instructions included in the program. The interface 802 may be configured to output an execution result of the processor 801. In this application, the interface 802 may be specifically configured to output messages or information of the processor 801.

For the communication method provided in one or more embodiments of this application, refer to the embodiments shown in FIG. 3 and FIG. 4. Details are not described herein again.

The processor in this embodiment of this application may be a central processing unit (Central Processing Unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The memory in this embodiment of this application is configured to provide storage space, and the storage space may store data such as an operating system and a computer program. The memory includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM).

According to the methods provided in embodiments of this application, an embodiment of this application further provides a computer-readable storage medium. The computer-readable storage medium stores a computer program. When the computer program is run on one or more processors, the methods shown in FIG. 3 and FIG. 4 may be implemented.

According to the methods provided in embodiments of this application, an embodiment of this application further provides a computer program product. The computer program product includes a computer program. When the computer program is run on a processor, the methods shown in FIG. 3 and FIG. 4 may be implemented.

An embodiment of this application further provides a system. The system includes at least one of the communication apparatus 60, the communication apparatus 70, or the chip 80, and is configured to perform steps performed by a corresponding device in any one of the embodiments in FIG. 3 and FIG. 4.

An embodiment of this application further provides a system. The system includes a first device and a second device. The first device is configured to perform the steps performed by the first device in any one of the embodiments in FIG. 3 and FIG. 4. The second device is configured to perform the steps performed by the second device in any one of the embodiments in FIG. 3 and FIG. 4.

An embodiment of this application further provides a processing apparatus, including a processor and an interface. The processor is configured to perform the method in any one of the foregoing method embodiments.

It should be understood that the processing apparatus may be a chip. For example, the processing apparatus may be a field programmable gate array (field programmable gate array, FPGA), or may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component, or may be a system on chip (system on chip, SoC), or may be a central processing unit (central processing unit, CPU), or may be a network processor (network processor, NP), or may be a digital signal processor (digital signal processor, DSP), or may be a micro controller unit (micro controller unit, MCU), or may be a programmable logic device (programmable logic device, PLD) or another integrated chip, and may implement or perform the methods, steps, and logical block diagrams disclosed in embodiments of this application. The general-purpose processor may be a microprocessor, or the processor may be any conventional processor or the like. The steps of the methods disclosed with reference to embodiments of this application may be directly performed by a hardware decoding processor, or may be performed by a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in a memory, and the processor reads information in the memory and performs the steps of the foregoing methods based on hardware of the processor.

It can be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and serves as an external cache. By way of example but not limitative description, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and the method described in this specification is intended to include but is not limited to these memories and any other appropriate type of memory.

All or some of the foregoing embodiments may be implemented by software, hardware, firmware, or any combination thereof. When the embodiments are implemented by software, all or some of the embodiments may be implemented in a form of a computer program product. The computer program product includes one or more computer instructions. When the computer instructions are loaded and executed on a computer, all or some of processes or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state drive, SSD)), or the like.

The units in the foregoing apparatus embodiments exactly correspond to an electronic device in the method embodiments, and corresponding modules or units perform corresponding steps. For example, a communication unit (transceiver) performs a sending or receiving step in the method embodiments, and steps other than sending and receiving may be performed by a processing unit (processor). For functions of specific units, refer to corresponding method embodiments. There may be one or more processors.

It can be understood that, in embodiments of this application, the electronic device may perform some or all of steps in embodiments of this application. These steps or operations are merely examples. In embodiments of this application, other operations or variations of various operations may alternatively be performed. In addition, the steps may be performed in a sequence different from a sequence presented in embodiments of this application, and not all the operations in embodiments of this application may be performed.

A person of ordinary skill in the art may be aware that, in combination with examples described in embodiments disclosed in this specification, units and algorithm steps can be implemented by electronic hardware or a combination of computer software and electronic hardware. Whether the functions are performed by hardware or software depends on particular applications and design constraints of technical solutions. A person skilled in the art may use different methods to implement the described functions for each particular application, but it should not be considered that the implementation goes beyond the scope of this application.

It can be clearly understood by a person skilled in the art that, for ease and brevity of description, for detailed working processes of the foregoing system, apparatus, and unit, reference may be made to corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separate, and components shown as units may or may not be physical units, to be specific, may be located in one place, or may be distributed on a plurality of network units. Some or all of the units may be selected according to actual requirements to achieve objectives of solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The storage medium includes any medium that can store program code, for example, a USB flash drive, a removable hard disk, a read-only memory ROM, a random access memory RAM, a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A communication method, comprising:
obtaining, by a first device, first information, wherein the first information comprises at least one of condition information for accessing a first cell and resource configuration information for accessing the first cell; and
sending, by the first device, the first information to a second device, wherein the first information is used for the second device to determine whether access to the first cell is allowed, or the first information is used for the second device to determine a first resource for accessing the first cell, and the first resource is used for the second device to communicate with the first device.

2. The method according to claim 1, wherein that the first information is used for the second device to determine whether access to the first cell is allowed, or the first information is used for the second device to determine a first resource for accessing the first cell comprises:
the first information and third information are used for the second device to determine whether access to the first cell is allowed, or the first information and the third information are used for the second device to determine the first resource for accessing the first cell, wherein
the third information is determined based on at least one of the following:
information about a charging speed of the second device, information about a discharging speed of the second device, information about remaining operation duration of the second device, information about remaining power of the second device, information about a power supply type of the second device, information about a capacitance of the second device, information about energy needed for activating the second device, information about a ratio of communication duration to charging duration of the second device, and measurement information of the second device.

3. The method according to claim 1 or 2, wherein the method further comprises:
receiving, by the first device, information about the second device, wherein the information about the second device comprises at least one of the following:
information about a charging speed of the second device, information about a discharging speed of the second device, information about remaining operation duration of the second device, information about remaining power of the second device, information about a power supply type of the second device, information about a capacitance of the second device, information about energy needed for activating the second device, information about a ratio of communication duration to charging duration of the second device, and measurement information of the second device.

4. The method according to claim 3, wherein the method further comprises:
determining, by the first device, the first information based on the information about the second device.

5. A communication method, comprising:
receiving, by a second device, first information from a first device, wherein the first information comprises related information for accessing a first cell; and
determining, by the second device based on the first information, whether access to the first cell is allowed, or a first resource for accessing the first cell, wherein the first resource is used for communicating with the first device.

6. The method according to claim 5, wherein the first information comprises at least one of the following:
condition information for accessing the first cell and resource configuration information for accessing the first cell.

7. The method according to claim 5 or 6, wherein the determining, based on the first information, whether access to the first cell is allowed, or a first resource for accessing the first cell comprises:
determining, based on the first information and third information, whether access to the first cell is allowed, or the first resource for accessing the first cell, wherein
the third information is determined based on at least one of the following:
information about a charging speed of the second device, information about a discharging speed of the second device, information about remaining operation duration of the second device, information about remaining power of the second device, information about a power supply type of the second device, information about a capacitance of the second device, information about energy needed for activating the second device, information about a ratio of communication duration to charging duration of the second device, and measurement information of the second device.

8. The method according to claim 7, wherein the first information comprises the condition information for accessing the first cell, and the determining, based on the first information and third information, whether access to the first cell is allowed comprises:
determining a level of the second device based on the first information and the third information; and
determining, based on the first information and the level of the second device, whether access to the first cell is allowed.

9. The method according to claim 8, wherein the determining, based on the first information and the level of the second device, whether access to the first cell is allowed comprises:
when the level of the second device is less than a first threshold indicated by the condition information, determining, by the second device, that access to the first cell is allowed; or
when the level of the second device is greater than or equal to a second threshold indicated by the condition information, determining, by the second device, that access to the first cell is not allowed, wherein the first threshold is less than or equal to the second threshold.

10. The method according to claim 7, wherein the first information comprises the resource configuration information for accessing the first cell, and the determining, based on the first information and third information, the first resource for accessing the first cell comprises:
determining a level of the second device based on the first information and the third information; and
determining, based on the first information and the level of the second device, the first resource for accessing the first cell.

11. The method according to claim 10, wherein the determining, based on the first information and the level of the second device, the first resource for accessing the first cell comprises:
determining a correspondence between a device level and an access resource based on the resource configuration information and the level of the second device; and
determining, based on the correspondence, the first resource corresponding to the level of the second device.

12. The method according to claim 11, wherein the correspondence between the device level and the access resource comprises a mapping relationship between an access occasion corresponding to the access resource and the device level.

13. The method according to any one of claims 7 to 12, wherein the method further comprises:
sending, by the second device, information about the second device to the first device, wherein the information about the second device comprises at least one of the following:
information about a charging speed of the second device, information about a discharging speed of the second device, information about remaining operation duration of the second device, information about remaining power of the second device, information about a power supply type of the second device, information about a capacitance of the second device, information about energy needed for activating the second device, information about a ratio of communication duration to charging duration of the second device, and measurement information of the second device.

14. A communication method, comprising:
obtaining, by a first device, second information, wherein the second information comprises information about two or more frequency resources for accessing a first cell; and
sending, by the first device, the second information to a second device, wherein the second information is used for the second device to determine a second resource for accessing the first cell, and the second resource is used for the second device to communicate with the first device.

15. The method according to claim 14, wherein that the second information is used for the second device to determine a second resource for accessing the first cell comprises:
the second information and fourth information are used for the second device to determine the second resource for accessing the first cell, wherein the fourth information comprises a reference value, and the reference value is a random number generated by the second device and/or an identifier of the second device.

16. A communication method, comprising:
receiving, by a second device, second information from a first device, wherein the second information comprises resource configuration information for accessing a first cell, and the resource configuration information comprises information about two or more frequency resources; and
determining, by the second device based on the second information and fourth information, a second resource for accessing the first cell, wherein the fourth information comprises a reference value, the reference value is a random number generated by the second device and/or an identifier of the second device, and the second resource is used for communicating with the first device.

17. The method according to claim 16, wherein the determining, by the second device based on the second information and fourth information, a second resource for accessing the first cell comprises:
determining, by the second device from the two or more frequency resources according to a preset rule, a frequency resource corresponding to the reference value as the second resource.

18. The method according to claim 17, wherein the determining, by the second device from the two or more frequency resources according to a preset rule, a frequency resource corresponding to the reference value as the second resource comprises:
when the reference value is within a first range, determining a first frequency resource as the second resource, wherein the first frequency resource is a frequency resource corresponding to the first range; or
when the reference value is within a second range, determining a second frequency resource as the second resource, wherein the second frequency resource is a frequency resource corresponding to the second range, wherein
the first frequency resource and the second frequency resource are two different frequency resources among the two or more frequency resources.

19. A communication apparatus, comprising:
a processing unit, configured to obtain first information, wherein the first information comprises at least one of condition information for accessing a first cell and resource configuration information for accessing the first cell; and
a transceiver unit, configured to send the first information to a second device, wherein the first information is used for the second device to determine whether access to the first cell is allowed, or the first information is used for the second device to determine a first resource for accessing the first cell, and the first resource is used for the second device to communicate with the communication apparatus.

20. A communication apparatus, comprising:
a transceiver unit, configured to receive first information from a first device, wherein the first information comprises related information for accessing a first cell; and
a processing unit, configured to determine, based on the first information, whether access to the first cell is allowed, or a first resource for accessing the first cell, wherein the first resource is used for communicating with the first device.

21. A communication apparatus, comprising:
a processing unit, configured to obtain second information, wherein the second information comprises information about two or more frequency resources for accessing a first cell; and
a transceiver unit, configured to send the second information to a second device, wherein the second information is used for the second device to determine a second resource for accessing the first cell, and the second resource is used for the second device to communicate with the communication apparatus.

22. A communication apparatus, comprising:
a transceiver unit, configured to receive second information from a first device, wherein the second information comprises resource configuration information for accessing a first cell, and the resource configuration information comprises information about two or more frequency resources; and
a processing unit, configured to determine, based on the second information and fourth information, a second resource for accessing the first cell, wherein the fourth information comprises a reference value, the reference value is a random number generated by the communication apparatus and/or an identifier of the communication apparatus, and the second resource is used for communicating with the first device.

23. A communication apparatus, comprising a processor, wherein
when the processor invokes a computer program or instructions in a memory, the method according to any one of claims 1 to 4 is performed, or the method according to any one of claims 5 to 13 is performed, or the method according to claim 14 or 15 is performed, or the method according to any one of claims 16 to 18 is performed.

24. A communication apparatus, comprising a logic circuit and an interface, wherein the logic circuit is coupled to the interface; and
the interface is configured to input to-be-processed data, the logic circuit processes the to-be-processed data according to the method according to any one of claims 1 to 4, claims 5 to 13, claim 14 or 15, or claims 16 to 18, to obtain processed data, and the interface is configured to output the processed data.

25. A computer-readable storage medium, comprising:
the computer-readable storage medium is configured to store instructions or a computer program, and when the instructions or the computer program is executed, the method according to any one of claims 1 to 4 is implemented, or the method according to any one of claims 5 to 13 is implemented, or the method according to claim 14 or 15 is implemented, or the method according to any one of claims 16 to 18 is implemented.

26. A computer program product, comprising instructions or a computer program, wherein
when the instructions or the computer program is executed, the method according to any one of claims 1 to 4 is performed, or the method according to any one of claims 5 to 13 is performed, or the method according to claim 14 or 15 is performed, or the method according to any one of claims 16 to 18 is implemented.

27. A communication system, comprising the communication apparatus according to claim 19, or the communication apparatus according to claim 20, or the communication apparatus according to claim 21, or the communication apparatus according to claim 22, or the communication apparatus according to claim 23, or the communication apparatus according to claim 24.

28. A communication system, comprising a first device and a second device, wherein
the first device is configured to perform the method according to any one of claims 1 to 4, and the second device is configured to perform the method according to any one of claims 5 to 13; or
the first device is configured to perform the method according to claim 14 or 15, and the second device is configured to perform the method according to any one of claims 16 to 18.
